(19) **Europäisches Patentamt / European Patent Office / Office européen des brevets**

(11) **EP 3 842 185 B1**

(12) **FASCICULE DE BREVET EUROPEEN**

(45) Date de publication et mention
de la délivrance du brevet:
**22.04.2026 Bulletin 2026/17**

(21) Numéro de dépôt: **20215268.2**

(22) Date de dépôt: **18.12.2020**

(51) Classification Internationale des Brevets (IPC):
**B25B 23/147** (2006.01)    **B25B 23/14** (2006.01)
**B25B 23/142** (2006.01)    **B25B 23/145** (2006.01)
**G05B 19/418** (2006.01)    **B23B 49/00** (2006.01)
**B25F 5/00** (2006.01)    **G05B 19/4065** (2006.01)

(52) Classification Coopérative des Brevets (CPC):
**B25B 23/147; B25B 23/14; B25B 23/1425;**
**B25B 23/1456; B25B 23/1475; B25F 5/00;**
**G05B 19/4065;** G05B 2219/45127; Y02P 90/80

(54) **PROCÉDÉ D'AIDE À LA MAINTENANCE D'UN OUTIL INDUSTRIEL, OUTIL ET SYSTÈME CORRESPONDANTS, ET PROGRAMME METTANT EN OEUVRE LE PROCÉDÉ**

VERFAHREN ZUR UNTERSTÜTZUNG DER WARTUNG EINES INDUSTRIEWERKZEUGS, ENTSPRECHENDES WERKZEUG UND SYSTEM, SOWIE PROGRAMM ZUR DURCHFÜHRUNG DES VERFAHRENS

METHOD FOR ASSISTING WITH THE MAINTENANCE OF AN INDUSTRIAL TOOL, CORRESPONDING TOOL AND SYSTEM, AND PROGRAM IMPLEMENTING THE METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **27.12.2019 FR 1915676**

(43) Date de publication de la demande:
**30.06.2021 Bulletin 2021/26**

(73) Titulaire: **ETABLISSEMENTS GEORGES RENAULT**
**44800 Saint Herblain (FR)**

(72) Inventeurs:
• **BOISARD, Simon**
**44230 SAINT SEBASTIEN SUR LOIRE (FR)**
• **MACQUET, Laurent**
**44240 LA CHAPELLE SUR ERDRE (FR)**

(74) Mandataire: **Vidon Brevets & Stratégie**
**16B, rue de Jouanet**
**BP 90333**
**35703 Rennes Cedex 7 (FR)**

(56) Documents cités:
**EP-A1- 3 501 745    WO-A1-2018/177669**
**US-A1- 2019 043 292**

## Description

### Domaine de l'invention

Le domaine de l'invention est celui de l'outillage industriel, et notamment des outils prévus pour exercer un vissage ou un perçage avec un ou plusieurs couples déterminés.

L'invention concerne plus précisément la maintenance de tels outils, et notamment la maintenance préventive, par exemple pour identifier un défaut ou un état d'usure de l'outil, et le cas échéant assurer de façon efficace et simplifiée une intervention.

### Art antérieur et ses inconvénients

Dans le domaine de la production industrielle, d'automobiles ou d'avions par exemple, les outils de vissage et/ou de perçage sont très largement utilisés. Ces outils, qui peuvent être fixes ou portatifs (et dans ce cas équipés de batteries), intègrent des moteurs, notamment électriques ou pneumatiques selon les applications envisagées. Ces outils sont généralement connectés (par radio ou de façon filaire) à un contrôleur, ou concentrateur (qui se présente par exemple sous la forme d'un coffret) permettant notamment de piloter différents cycles de fonctionnement.

Par exemple, dans le cas d'une visseuse, le vissage est asservi et l'outil effectue une mesure du couple appliqué sur la vis par la visseuse. Cette mesure est transmise au contrôleur qui vérifie que sa valeur se situe dans les limites prévues par la recette de vissage. De cette manière, le contrôleur peut déclencher l'arrêt du travail lorsque la mesure du couple atteint une valeur de seuil. Les résultats de vissage peuvent être enregistrés sur des bases de données qualité, pour un traitement a posteriori, et/ou utilisés par l'opérateur pour vérifier si le serrage est correct ou non. Le contrôleur permet notamment d'assurer une traçabilité des opérations effectuées par l'outil, en assurant par exemple l'enregistrement de résultats tels que le couple final de vissage, la vitesse de vissage l'angle final de vissage, la date et l'heure des opérations ou encore les tables représentatives de la qualité (bonne ou mauvaise, en fonction de paramètres prédéterminés) du vissage effectué.

La mesure faite par le capteur équipant l'outil est une image du couple appliqué sur la vis. Cette mesure est impactée par différents éléments de transmission qui ajoutent un bruit sur le signal mesuré. La visseuse comprend au moins les éléments suivants :

- un moteur ;
- un ou plusieurs trains épicycloïdaux ayant pour but d'augmenter le couple produit par le moteur ; et
- un capteur de couple.

Il peut également comprendre d'autres éléments, notamment un renvoi d'angle.

Tous ces éléments peuvent venir perturber le signal du capteur, qui n'est alors plus une image parfaite du couple appliqué à la vis. Ce bruit peut par exemple provoquer un arrêt ne correspondant pas à la consigne d'arrêt prédéfinie, et donc entraîner de mauvais vissages alors que la visseuse renvoie un compte-rendu positif. De plus, la dégradation des éléments de transmission peut entrainer une augmentation des bruits sur le signal mesuré. Cette augmentation du bruit génère une diminution des performances de l'outil (dégradation de la précision) et/ou de la qualité du vissage effectuée.

Il est donc souhaitable de contrôler la précision de ces moyens de vissage et du bon état de fonctionnement des outils, que ce soit pour le contrôle et/ou le suivi des paramètres de vissage ou pour la bonne exécution de ces paramètres.

En d'autres termes, la fiabilité des outils doit pouvoir être vérifiée, et ceci régulièrement durant toute la durée d'utilisation des outils, de façon à pouvoir effectuer une maintenance, de préférence préventive. On cherche ainsi à éviter, ou à tout le moins réduire, notamment les états d'usure conduisant à une mauvaise qualité de vissage et/ou à la casse des outils sur la ligne de production, nécessitant alors l'arrêt de cette ligne pour le remplacement de l'outil. Ceci nuit bien entendu au rendement global de la ligne de production concernée.

Des contrôles peuvent être effectués de différentes manières. Par exemple, le document FR2882287 décrit un outil de vissage comprenant un organe rotatif monté sur un corps et un capteur de mesure du couple de serrage. La mesure du couple fournit des éléments permettant de déterminer l'état d'usure des organes. Plus précisément, ce document enseigne de traiter un spectre de fréquences afin d'extraire au moins une fréquence vibratoire associée à un organe rotatif, cette fréquence est ensuite comparée avec une fréquence de référence en vue de déterminer l'état d'usure de l'organe rotatif considéré.

Ceci permet d'identifier d'éventuelles défectuosités que présente la visseuse mais non un niveau de précision de serrage.

Un autre exemple connu se trouve dans le document WO2018177669, qui montre le préambule de la revendication 1, où des caractéristiques d'usure d'une perceuse sont utilisées à des fins de maintenance de l'outil.

Il est connu d'appliquer une maintenance préventive consistant à comptabiliser le nombre d'utilisations de l'outil (nombre de vissages, ou temps cumulé d'utilisation) et de comparer la valeur de ce compteur avec des préconisations produites par les fournisseurs d'outils, ces préconisations se traduisant par une périodicité d'entretien. Cette méthode procède à une approche empirique qui fournit une estimation statistique de l'usure d'un outil mais ne donne pas réellement son état actuel.

En d'autres termes, l'opérateur, pour effectuer la maintenance d'un outil, procède de la façon suivante :

- consultation de la notice et lecture des instructions,
- démontage de l'outil,
- inspection visuelle des composants,
- identification du composant défectueux,
- consultation du fournisseur pour connaitre la disponibilité du composant, commande...
- réception et remplacement du composant.

Ce processus est long et donc coûteux.

Par ailleurs, il peut conduire à des interventions inutiles (remplacement d'une pièce non usée) ou trop tardives (non détection d'une pièce usée).

Il est également connu d'effectuer des contrôles réguliers, sur banc de test. Ces contrôles nécessitent également un arrêt de la production, l'outil étant déplacé sur le banc de test, généralement dans un site distinct de celui de la production. Ceci entraîne un ralentissement de la production et/ou la mise en œuvre d'outils de remplacement.

La norme ISO5393 prévoit ainsi que l'on effectue au moins 25 vissages de test, pour contrôler un outil de vissage.

Il existe donc, selon les applications et/ou les outils :

- un besoin pour mettre en œuvre une technique de maintenance d'un outil plus aisée et plus efficace, notamment dans la détection des composants défectueux,
- un besoin de traitement (analyse de défectuosité et intervention) rapide et en local (et par exemple sans que l'information ne soit diffusée en dehors de l'entreprise ou de l'atelier),
- un besoin de détection préventive de défaillance, permettant d'anticiper un nécessaire remplacement d'un composant,
- un besoin de rationalisation de la maintenance, en ne changeant que les composants réellement défectueux,
- un besoin d'aide à la maintenance, facilitant la tâche de l'opérateur chargée de la maintenance, et/ou
- un besoin de suivi de la maintenance et de la qualité de l'outil.

La présente invention vise notamment à apporter une solution simple et efficace à cette exigence.

**Exposé de l'invention**

Selon un premier aspect de l'invention, il est proposé un procédé d'aide à la maintenance d'un outil industriel tel qu'une visseuse ou une perceuse, mettant en œuvre plusieurs composants mobiles en rotation selon la revendication 1.

Ainsi, seules les interventions nécessaires de maintenance sont effectuées, au moment le plus opportun, et elles le sont de façon aisée, grâce aux informations d'assistance.

Selon les mises en œuvre, la mémoire peut être associée à l'outil ou à un concentrateur pilotant celui-ci. Ainsi, le terme "associée à l'outil" signifie notamment "intégrée à l'outil" ou "portée par l'outil" (par exemple sous la forme d'un module optionnel) ou "déportée, mais appairée à l'outil" par exemple dans le concentrateur.

Selon les cas, et notamment la puissance de traitement disponible, l'étape d'analyse peut être effectuée par l'outil et/ou par le concentrateur.

De même, selon les cas, l'étape d'identification d'un composant fautif peut être faite par le concentrateur, qui transmet ensuite cette information à l'outil avec la signature, l'outil lui-même et/ou le terminal.

L'opérateur dispose, directement sur son terminal, d'un descriptif d'une opération de démontage, de repérage, de montage... Les informations en trois dimensions sur ledit outil, combinées aux images de l'outil prises à l'aide d'une caméra dudit terminal, permettent de fournir à l'opérateur une représentation en réalité augmentée sur l'écran dudit terminal, par exemple pour identifier un composant défectueux et/ou des opérations de maintenance à effectuer.

L'intervention est ainsi facilitée, l'opérateur étant guidé visuellement, directement sur une vue de l'outil lui-même. Les informations en trois dimensions permettent de superposer aux images des éléments guidant l'opérateur, par exemple sous la forme de zones colorées, de flèches ou autres éléments d'identification d'une zone, d'une portion ou d'un composant, d'une manipulation à effectuer (vissage, dévissage, emplacement d'introduction et/ou de déplacement à effectuer...), indications écrites...

Selon un mode de réalisation particulier, ladite étape d'obtention d'informations d'assistance comprend une étape de connexion à un serveur de maintenance distant, contenant un ensemble d'informations relatives audit outil, dit jumeau numérique de l'outil, et comprenant au moins une des informations appartenant au groupe comprenant :

- une représentation en trois dimensions de l'outil,
- un éclaté de l'outil,
- une fiche signalétique de l'outil,
- une nomenclature de l'outil,
- un procès-verbal de calibration de l'outil,
- un historique de maintenance de l'outil,
- une signature théorique de l'outil,
- une signature initiale de l'outil,
- au moins une signature précédente de l'outil.

La mise en œuvre d'un tel jumeau numérique permet de disposer d'une grande quantité de données, possiblement mises à jour à chaque intervention, et de faciliter la détection de problèmes et leurs traitements, pour chaque type d'outils, et pour l'outil considéré en particulier. Procédé d'aide à la maintenance d'un outil selon la revendication 1, caractérisé en ce que ladite étape d'analyse est mise en œuvre dans un concentrateur connecté audit outil, recevant lesdites données de mesure dudit outil, effectuant ladite analyse.

Cette approche est utile notamment lorsque la capacité de traitement de l'outil n'est pas suffisante pour effectuer une telle analyse, ou qu'il n'est pas souhaitable d'équiper l'outil d'une telle capacité de traitement. Dans ce cas, l'outil effectue les mesures, et les transmet au concentrateur. Dans le cas où la mémoire est portée par l'outil, une transmission du concentrateur vers l'outil, et en particulier vers cette mémoire, est ensuite mise en œuvre.

Selon une mise en œuvre particulière, ladite signature comprend une pluralité de raies fréquentielles.

Dans ce cas, ladite étape d'identification peut notamment effectuer une comparaison de l'amplitude de chaque raie avec une valeur de seuil prédéterminée (par exemple sous la forme d'une signature de référence).

En variante ou en complément, ladite étape d'identification peut également mettre en œuvre une analyse de l'évolution de l'amplitude de chaque raie entre deux signatures, notamment les deux dernières signatures.

Selon un mode de réalisation particulier, ladite étape d'analyse tient compte d'une agrégation de données de mesures correspondant à au moins deux vissages. En effet, pour disposer d'une signature fiable, il peut être souhaitable de disposer de données relevées sur une plage angulaire suffisante (par exemple au moins 720°). Si un vissage unique ne couvre pas une telle plage, on pourra tenir compte de plusieurs vissages, de préférence selon une agrégation optimisée. L'invention comprend une étape de guidage, par ledit terminal, de l'opérateur, pour la réalisation d'une intervention sur un composant défectueux.

Selon un mode de réalisation particulier, le procédé peut également comprendre une étape de prédiction d'une usure ou d'un défaut d'un composant, par analyse d'une série d'au moins deux signatures dudit outil et/ou d'un lot d'outils similaires et/ou par comparaison à des valeurs de seuil prédéterminées.

L'invention concerne également un système d'aide à la maintenance d'un outil industriel tel qu'une visseuse ou une perceuse selon la revendication 8.

Selon un autre aspect particulier, ledit serveur de maintenance distant contient un ensemble d'informations relatives audit outil, dit jumeau numérique de l'outil, et comprenant au moins une des informations appartenant au groupe comprenant :

- une représentation en trois dimensions de l'outil,
- un éclaté de l'outil,
- une fiche signalétique de l'outil,
- une nomenclature de l'outil,
- un procès-verbal de calibration de l'outil,
- un historique de maintenance de l'outil,
- une signature théorique de l'outil,
- une signature initiale de l'outil,
- au moins une signature précédente de l'outil.

L'invention concerne également des programmes d'ordinateur comprenant des instructions de code de programme pour la mise en œuvre du procédé de contrôle décrit ci-dessus (selon l'un quelconque des différents modes de réalisation précités), lorsqu'il est exécuté sur un ordinateur et/ou par un microprocesseur.

Ces programmes peuvent être mis en œuvre respectivement dans l'outil et/ou dans le terminal et/ou dans un dispositif distant apte à échanger avec le terminal, pour effectuer tout ou partie des étapes du procédé de contrôle.

**Liste des figures**

D'autres buts, caractéristiques et avantages de l'invention apparaîtront plus clairement à la lecture de la description suivante, donnée à titre de simple exemple illustratif, et non limitatif, en relation avec les figures, parmi lesquelles :

[Fig. 1] est une vue en coupe d'outil intégré à un ensemble d'outillage selon l'invention ;
[Fig. 2] est un diagramme fonctionnel d'un outillage selon l'invention ;
[Fig. 3] présente sur un exemple de schéma les variations de couple de serrage en fonction du nombre de serrages effectués par un même outil ;
[Fig. 4] présente un ordinogramme des principales étapes pour la mise en œuvre d'un procédé de contrôle d'un niveau de qualité selon une première mise en œuvre ;
[Fig. 5a] présente un exemple de caractéristique linéaire d'une raideur donnée, selon la première mise en œuvre ;
[Fig. 5b] présente un exemple d'une courbe représentative de la première relation, selon la première mise en œuvre ;
[Fig. 5c] présente un exemple d'une courbe représentative de la seconde relation, selon la première mise en œuvre ;
[Fig. 5d] présente un exemple d'une courbe représentative de la troisième relation, selon la première mise en œuvre ;
[Fig. 6a] présente un exemple d'une courbe représentative de la première table, selon une deuxième mise en œuvre ;
[Fig. 6b] présente un exemple d'une courbe représentative de la deuxième table, selon la deuxième mise en œuvre ;
[Fig. 6c] présente un exemple d'une courbe représentative d'une table intermédiaire, illustrant le fait que l'outil s'arrête toujours au niveau d'un maximum, selon la deuxième mise en œuvre ; [Fig. 6d] présente un exemple d'une courbe représentative de la troisième table, selon la deuxième mise en œuvre ;
[Fig. 7] présente un ordinogramme des principales étapes pour la mise en œuvre du procédé de contrôle d'un niveau de qualité selon un premier mode de réalisation de l'invention ;
[Fig. 8a] présente un exemple de deux courbes représentatives de deux premières tables obtenues pour deux vissages de vis par la visseuse de la Fig. 1, selon le premier mode de réalisation ;
[Fig. 8b] présente un exemple de deux courbes représentatives de deux troisièmes tables correspondant aux deux courbes de la Fig. 8a, selon le premier mode de réalisation ;
[Fig. 8c] présente un exemple de courbes représentatives d'un jeu de tables agrégées intermédiaires obtenues à partir des deux courbes de la Fig. 8b, selon le premier mode de réalisation ;
[Fig. 9] présente un ordinogramme des principales étapes pour la mise en œuvre du procédé de contrôle d'un niveau de qualité selon un deuxième mode de réalisation ;
[Fig. 10a] présente un exemple d'une version tronquée de courbe représentative de la troisième table obtenue pour un premier vissage de vis par la visseuse de la Fig. 1, selon le deuxième mode de réalisation ;
[Fig. 10b] présente un exemple d'une version décalée de courbe représentative de la troisième table obtenue pour un deuxième vissage de vis par la visseuse de la Fig. 1, selon le deuxième mode de réalisation ;
[Fig. 10c] présente un exemple de courbe représentative de la troisième table agrégée candidate obtenue par concaténation optimisée des courbes de la Fig. 10a et de la Fig. 10b, selon le deuxième mode de réalisation ;
[Fig. 11] illustre un exemple de résultat d'analyse de mesures, pour une visseuse, permettant de définir une signature de l'outil ;
[Fig. 12] présente un exemple de mise en œuvre du procédé de l'invention ;
[Fig. 13] illustre un exemple de relevé de signature d'un outil par un opérateur ;
[Fig. 14] illustre un exemple d'aide à la maintenance, à partir d'un terminal portable d'un opérateur.
[Fig. 15] est un organigramme simplifié d'un mode de réalisation de l'invention.

**Description détaillée de modes de réalisation de l'invention**

Le principe général de la technique décrite repose notamment sur un stockage, dans une mémoire de chaque outil, d'une signature de celui-ci, contenant notamment des données représentatives de la qualité du travail, par exemple d'un vissage, et en particulier de la qualité de chacun des composants d'un ensemble de composants prédéterminés, et sur la mise en œuvre d'une assistance de l'opérateur en réalité augmentée, pour guider ce dernier dans une intervention de maintenance, dont la nécessité est détectée par l'analyse de la signature. L'analyse de la qualité, ou de l'état, de ces composants, peut notamment être effectuée selon la technique décrite dans le document de brevet FR2882287. D'autres solutions sont décrites, à titre d'exemples, en annexe, qui fait partie intégrante de la présente description.

D'autres méthodes d'obtention d'informations sur la qualité du travail d'un outil peuvent bien sûr être utilisées, ou adaptées, selon le type d'outil.

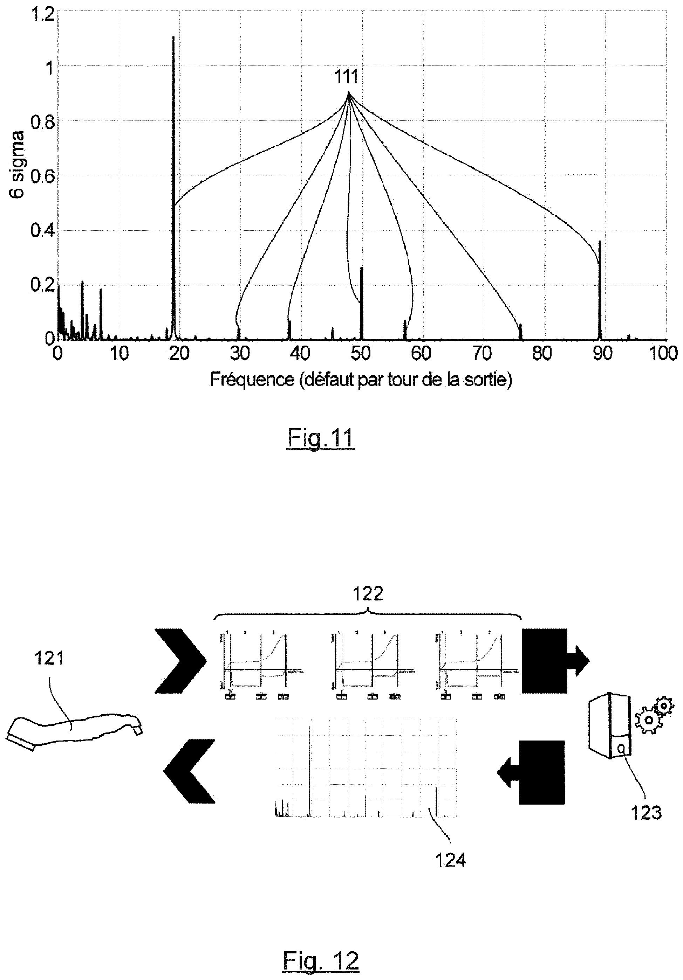

Un exemple de résultats de mesures effectuées sur l'angle et le couple de vissage est illustré sur la **Fig. 11.** L'histogramme illustré présente la fréquence en fonction de 6 sigma (calculs détaillés en annexe). Il apparaît une série de pics 111, à des fréquences particulières. On sait que chacun de ces pics correspondent à un des composants (fréquence de fonctionnement ou harmoniques), et il est donc possible de détecter une défectuosité, en considérant l'amplitude du pic et/ou son décalage fréquentiel, par rapport à une fréquence de référence. Par exemple, l'analyse de l'amplitude de la raie permet de déterminer si la dispersion (globale et particulière) est trop importante (par exemple en pourcentage de la dispersion d'une raie par rapport à la dispersion globale).

Ceci permet de construire une signature de l'outil, par exemple sous la forme en associant à chaque composant une valeur de fréquence et/ou une amplitude, ou une information plus simple de qualité (par exemple 1 si la ou les valeurs considérées sont dans une plage considérée acceptable, et 0 si ces valeurs dépassent un seuil prédéterminé, fixé par le constructeur).

La signature peut en outre contenir des informations telles que l'identifiant de l'outil, sa date de mise en service, la date de la dernière intervention, un temps d'utilisation...

Cette signature est stockée dans une mémoire dédiée de l'outil, par exemple une puce RFID, qui peut être lisible par une liaison sans contact à courte distance, par exemple selon la norme NFC, de façon que la lecture soit possible même lorsque l'outil n'est pas alimenté.

L'opérateur dispose d'un terminal mobile, par exemple un téléphone intelligent ("smartphone" en anglais), une tablette ou un terminal dédié, apte à lire le contenu de la puce RFID, et relever la signature de l'outil.

Le cas échéant, plusieurs signatures peuvent être stockées dans l'outil, et par exemple une signature de référence, correspondant à une signature théorique idéale, une signature initiale, à l'origine lors de la construction de l'outil, et/ou une ou plusieurs signatures récentes, permettant d'analyser une évolution de l'usure des composants. En variante, ses signatures peuvent être conservées dans le terminal de l'opérateur, dans le concentrateur ou dans un serveur distant auquel le terminal se connecte.

Comme détaillé en annexe, l'obtention de la signature se fait par analyse d'une ou plusieurs séries de mesures effectuées par l'outil. Si celui-ci dispose d'une puissance de calcul suffisante, il peut effectuer les calculs lui-même, déterminer la signature courante et la placer dans la mémoire RFID.

Il est cependant courant que les outils ne disposent pas en interne d'une telle puissance de calcul. Dans ce cas, les calculs peuvent être effectués par le concentrateur. L'outil transmet à celui-ci, périodiquement ou en permanence, les mesures effectuées sur l'angle et le couple. Le concentrateur effectue les traitements requis, par exemple selon les approches décrites en annexe, détermine la signature et la transmet à l'outil, pour stockage.

Cette approche est schématiquement illustrée en **Fig. 12.** L'outil 121 transmet à un concentrateur 123, ici en permanence, "au fil de l'eau", les résultats de mesures de couples et d'angles de chaque vissage, illustrés ici par des courbes 122. Le concentrateur 123 effectue un traitement des données de mesure, par exemple la concaténation de celles-ci et l'application d'une FFT, pour produire une signature, illustrée par la courbe 124 (correspondant à la figure 11).

Cette signature est transmise à l'outil 121, qui la stocke dans sa mémoire RFID.

L'opérateur de maintenance peut ainsi relever, à tout moment, la signature de l'outil, que celui-ci soit alimenté ou non, à l'aide d'un terminal par exemple équipé d'un lecteur NFC/RFID. L'opérateur peut effectuer un contrôle périodique de l'ensemble des outils dont il a la charge, simplement en lisant le contenu de la mémoire RFID. Il peut aussi être alerté, par une alarme. Par exemple, dans le cas où un seuil prédéterminé est atteint, le contrôleur (ou l'outil, le cas échéant via le contrôleur) peut émettre une alarme pour signaler un besoin de maintenance de l'outil ou même bloquer l'outil pour éviter de produire avec un risque de non qualité. Ces alarmes peuvent être émises sur l'interface homme machine du contrôleur, de l'outil mais également envoyées par les moyens classiques tels que les réseaux Ethernet, bus de terrain aux systèmes de supervision de l'usine.

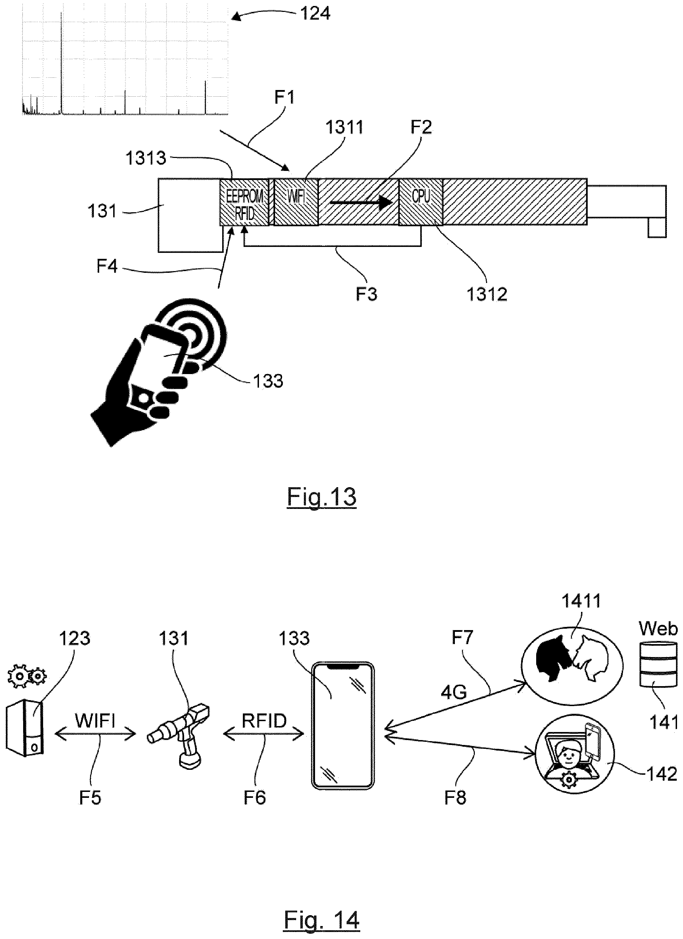

L'obtention de la signature est illustrée schématiquement par la **Fig. 13.**

L'outil 131 reçoit (F1) du concentrateur 123, comme expliqué ci-dessus, la signature 124, par exemple via une liaison Wifi (ou tout autre moyen de communication, filaire ou non filaire, en fonction des moyens mis en œuvre pour communiquer entre le concentrateur et l'outil). Les moyens 1311 de traitement du signal Wifi transmettent (F2) la signature au microprocesseur (CPU) 1312 de l'outil, qui l'inscrit (F3) dans la mémoire RFID, par exemple de type EEPROM, 1313. Cette opération de synchronisation de l'outil peut être effectuée à intervalles réguliers, pour que l'outil garde une signature à jour, représentative de sa dispersion courante.

Le terminal 133 accède (F4) à cette mémoire 1313, pour relever la signature et appliquer en conséquence une éventuelle maintenance.

En variante, le microprocesseur 1312 peut effectuer un prétraitement des données reçues du concentrateur. Dans ce cas, la signature comprend, en remplacement ou en complément du traitement effectué par exemple selon les techniques décrites en annexe, des données sur un composant à vérifier ou à remplacer. Ce traitement peut également être effectué, par anticipation, par le concentrateur. Sinon, ce traitement est effectué par le terminal, après chargement (F4) de la signature et/ou par un serveur distant auquel le terminal se connecte.

Il est en effet aisé pour ce terminal, en particulier s'il s'agit d'un téléphone, de se connecter avec un serveur, par exemple via une liaison 4G.

Ceci est illustré schématiquement par la **Fig. 14.** Comme indiqué précédemment, l'outil 131 reçoit (F5) sa signature du concentrateur 123, par exemple en Wifi. Le terminal 133 relève (lecture NFC de la mémoire RFID de l'outil) (F6) cette signature. Il peut ensuite se connecter (F7) à un serveur distant 141, et/ou contacter (F8) un service distant d'assistance 142.

Le serveur distant 141 peut notamment contenir de nombreuses informations sur l'outil et son évolution dans le temps, par exemple sous la forme d'un "jumeau numérique", de façon à faciliter le suivi et la maintenance. Celui-ci peut notamment contenir, et mettre à disposition de l'opérateur sur son terminal : une représentation en 3D de l'outil, son éclaté, sa fiche signalétique, sa nomenclature, son procès-verbal de calibration, son historique de maintenance... Il peut également contenir les signatures successives transmises par le terminal, et le cas échéant une analyse de celles-ci, par exemple pour repérer une variation ou une évolution anormale. Ainsi, le jumeau numérique se trouve enrichi de l'état actuel de dispersion.

Il est ensuite possible d'utiliser les périphériques du terminal pour optimiser la restitution de l'information à l'opérateur de maintenance. En particulier, en combinant l'utilisation de la caméra, de l'écran et en ayant à disposition des informations sur l'outil, notamment un modèle 3D de l'outil (ou plus généralement des informations permettant de construire des informations en trois dimensions), il est possible, grâce à un logiciel hébergé sur le smartphone, de montrer à l'utilisateur en réalité augmentée les composants causant la dispersion et potentiellement à changer, une intervention ou un contrôle à effectuer...

Les informations en trois dimensions permettent de superposer aux images des éléments guidant l'opérateur en réalité augmentée, par exemple sous la forme de zones colorées, de flèches ou autres éléments d'identification d'une zone, d'une portion ou d'un composant, d'une manipulation ou d'un contrôle à effectuer (vissage, dévissage, emplacement d'introduction et/ou de déplacement à effectuer...), d'un point de mesure, d'indications écrites...

La démarche de contrôle et de maintenance mise en œuvre peut ainsi être la suivante :

- l'opérateur de maintenance lit la puce RFID à l'aide de son terminal pour faire l'acquisition de la signature de l'outil ;
- le terminal se connecte à un serveur contenant le jumeau numérique de l'outil et télécharge le modèle 3D de l'outil ;
- le terminal combine les informations de la signature de l'outil et le modèle 3D pour mettre en exergue les composants contribuant le plus à la dispersion de l'outil ;
- l'opérateur de maintenance utilise la caméra du terminal pour filmer l'outil, et un logiciel de traitement superpose le modèle 3D téléchargé sur l'outil et présente en réalité augmentée les composants défectueux ;
- l'opérateur est guidé dans l'opération à réaliser, démontage, changement de la pièce, remontage..., par des enrichissements sur les images en réalité augmentée, et le cas échéant des informations complémentaires (audio, écrit...).

Une fois l'opération de maintenance réalisée, elle est consignée dans le jumeau numérique, avec les numéros de série des nouveaux composants éventuellement montés dans l'outil.

Ces informations, stockées dans un serveur, peuvent par ailleurs permettre une analyse statistique de plusieurs opérations de maintenance effectuées, pour détecter des composants fragiles, identifier des causes de défectuosités, adapter les instructions, émettre des recommandations de maintenance préventive...

Ceci peut également permettre de faciliter une gestion de stock, d'anticiper des commandes de composants, de faire évoluer les produits...

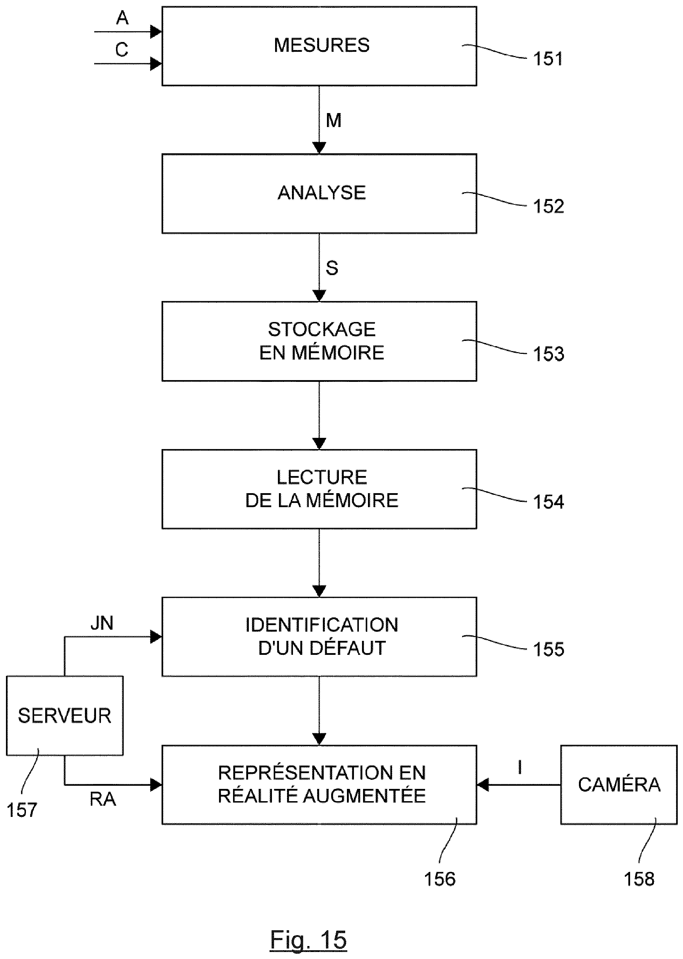

Le procédé de l'invention selon un mode de réalisation est résumé sur la **Fig. 15.**

L'outil effectue (151), périodiquement voire en permanence des mesures M du couple C et/ou de l'angle A, qui sont ensuite analysés (152) pour déterminer une signature S. Si l'outil dispose d'une capacité de traitement suffisante, cette analyse est effectuée en interne. Sinon, les données de mesure M sont transmises à un dispositif externe, par exemple un concentrateur 123, qui détermine cette signature S et la retourne à l'outil, qui la stocke (153) dans sa mémoire interne. Il est bien sûr également possible de distribuer le traitement d'analyse entre l'outil et le concentrateur.

Ainsi, l'outil dispose en permanence, dans sa mémoire pouvant être lue à distance, par exemple en RFID. L'opérateur de maintenance peut à tout moment, sans interrompre l'utilisation de l'outil ni devoir le déplacer dans un espace de maintenance, lire (154) le contenu de la mémoire, et obtenir les informations utiles à la maintenance, et notamment la signature S.

Le serveur distant 157 contient des informations de référence, par exemple un jumeau numérique JN de l'outil et/ou une signature de référence, qui permettent d'identifier (155) un éventuel défaut D (composant défaillant, besoin de réglage ou d'intervention...), par comparaison avec la signature S. Selon la capacité de traitement disponible, cette identification de défaut peut être effectuée par le terminal et/ou le serveur.

Pour assister l'opérateur à résoudre ce défaut D, une représentation en réalité augmentée est fournie (156) sur l'écran du terminal, combinant des images I de l'outil obtenues à l'aide d'une caméra 157 portée par le terminal et des informations complémentaires RA, fournies par le serveur 158, notamment des informations en 3D ainsi que, le cas échéant, des instructions, des animations, des illustrations... guidant l'opérateur dans ses opérations de maintenance. Le cas échéant, des informations peuvent également être projetées directement sur l'outil, à partir du terminal, s'il dispose de moyens de projection.

**ANNEXE**

*1. exemple d'outil mettant en œuvre la technique de l'invention*

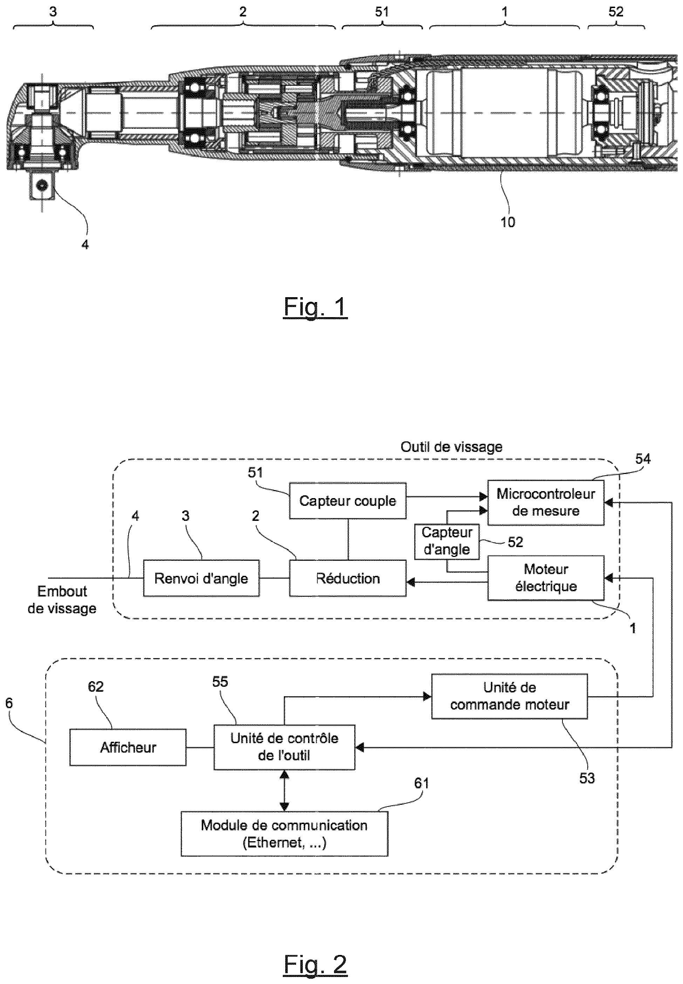

En référence à la **Fig. 1,** un outil de vissage selon le présent mode de réalisation comprend un moteur 1 monté dans le corps 10 de l'outil, la sortie moteur étant couplée à un ensemble d'engrènement , ou réducteur, 2, formé de trains épicycloïdaux, lui-même couplé à un engrènement de renvoi d'angle 3 (l'axe de vissage étant ici perpendiculaire à l'axe moteur ; le renvoi d'angle 3 peut être absent dans le cas d'un autre mode de réalisation envisageable selon lequel l'axe de vissage et l'axe moteurs sont coaxiaux) destiné à entraîner en rotation une tête de vissage présentant un embout 4 prévu pour recevoir une douille de vissage.

De façon connue en soi, un capteur de couple 51 (par exemple un pont de jauges de contraintes) délivre des informations relatives au couple de serrage exercé par l'outil. Un capteur d'angle 52 est également prévu, à l'arrière du moteur. Il peut par exemple comprendre un aimant tournant devant un capteur à effet Hall porté par une carte électronique.

Sur le diagramme fonctionnel de la **Fig. 2,** les organes mécaniques sont cette fois représentés sous forme schématique de façon à faire apparaître le moteur 1, le réducteur 2 et le renvoi d'angle 3. Tel qu'illustré, le capteur de couple 51 est relié à un microcontrôleur de mesure 54 qui transmet les données à une unité de contrôle 55 de l'outil.

En fonction des données fournies par le capteur de couple 51, une unité de contrôle 55 pilote le fonctionnement du moteur 1 par l'intermédiaire d'une unité de commande 53.

L'unité de contrôle 55 intègre en outre des moyens de traitement du signal fourni par le capteur 51 de couple pour délivrer au moins une information représentative d'une dispersion et/ou d'un écart par rapport audit objectif de vissage, résultant de perturbations générées par la visseuse. Selon le présent mode de réalisation, l'unité de contrôle 55 et l'unité de commande 53 sont intégrées dans une unité 6, désignées par le terme de « contrôleur de vissage » sur la figure 2.

Le contrôleur 6 de vissage comprend ou peut être formé par un microprocesseur ou microcontrôleur, mettant en œuvre un programme, stocké dans une mémoire interne ou externe, permettant notamment d'exécuter les étapes du procédé de l'invention, par exemple selon les modes de réalisation décrits par la suite. Il peut intégrer ou contrôler en outre :

- un module de communication 61 permettant de relier le contrôleur 6 à un réseau d'échanges d'information, par exemple de type Ethernet ;
- un afficheur 62.

Ainsi, lorsque le contrôleur 6 détecte que des valeurs de dispersion ou d'écart par rapport à la consigne ne répondent plus aux exigences de production, un signal et/ou un message d'alerte est affiché sur l'afficheur 62, et éventuellement envoyé à un poste distant par l'intermédiaire du module de communication.

Dans le cas d'un outil à batterie, les fonctions de contrôle de l'outil 55 et de commande de moteur 53 peuvent être intégrées dans l'outil.

Selon un mode de réalisation, un tel message peut indiquer l'organe défaillant concerné, par exemple par comparaison de la dispersion individuelle par rapport à des valeurs seuils ou un pourcentage de la dispersion, et peut également préciser le type de maintenance et/ou d'entretien à effectuer.

On rappelle que le couple de vissage est déterminé à partir d'une tension transmise par le capteur 5 de couple.

*2. contrôle d'un niveau de qualité du vissage*

Après avoir détaillé par des exemples les principaux dispositifs pour la mise en œuvre de l'invention, nous allons maintenant expliciter comment ceux-ci coopèrent dans le cadre d'un procédé de contrôle d'un niveau de qualité de vissage d'un outil.

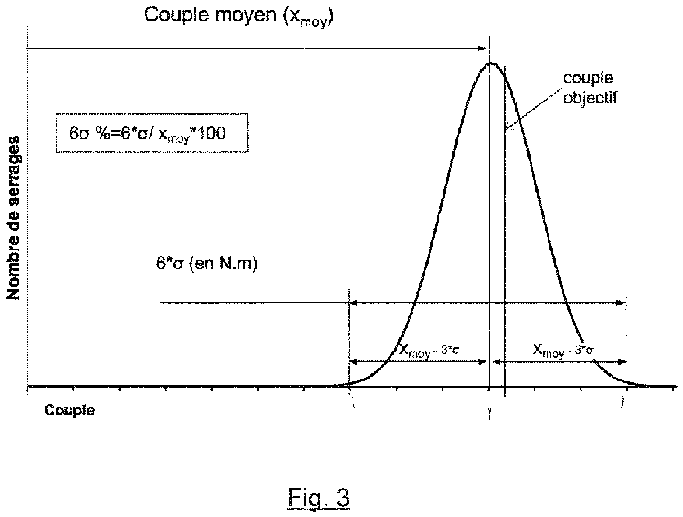

La courbe de la **Fig. 3** illustre les variations de couple de serrage en fonction du nombre de serrages mesurés. Cette courbe est élaborée à partir de plusieurs mesures (par exemple de 25 à 100) permettant de réaliser des études statistiques sur le comportement d'un outil. L'exploitation des résultats donne notamment les deux données suivantes :

- la dispersion des serrages de l'outil, caractérisée par un écart-type ($\sigma$), informant sur la capacité de l'outil à reproduire un couple avec précision. La dispersion est en général exprimée comme 6 fois l'écart type divisé par la moyenne en pourcentage ;
- l'écart par rapport à l'objectif, évalué en calculant la différence entre la moyenne et l'objectif, divisée par l'objectif. La calibration préalable de la visseuse par rapport à l'objectif a pour but d'avoir un écart le plus faible possible.

La courbe de mesure a typiquement la forme d'une gaussienne, la quasi-totalité des serrages (99,73 % dans les tests effectuées) se situant dans la zone des $6\sigma$.

Pour estimer correctement la précision de l'outil durant un seul serrage (ou sur un nombre limité de serrages), il est nécessaire que tous les défauts soient présents sur la courbe de couple. Or un défaut qui se présente une fois par tour d'arbre de sortie de visseuse ne va pas forcément apparaitre si la vis requière une rotation de 30° pour être serrée. Un angle minimum de rotation de 720° (au moins deux tours pour analyser les basses fréquences) de l'arbre de sortie est souhaitable (obtenu sur un ou, selon la présente invention, plusieurs vissages).

Les perturbations provoquant des variations de couple d'un vissage à l'autre ont diverses origines telles que l'engrènement des dentures ou encore les perturbations électriques des signaux par le champ magnétique du moteur qui génèrent des écarts entre la mesure de couple et le couple réellement appliqué sur la vis.

Ces perturbations se caractérisent par une oscillation de la mesure du couple de l'outil autour de ce que serait la valeur réellement appliquée à la vis si elle était mesurée en temps réel par un capteur placé entre la vis et la visseuse.

Cette oscillation se produit à des fréquences et amplitudes variables dépendantes de l'origine des perturbations.

Dans le cadre de la présente description, on considère par hypothèse que l'amplitude des perturbations est proportionnelle au couple instantané fourni par la visseuse. Ceci a pour conséquence que les dispersions et écarts sont du même niveau quel que soit le couple de serrage.

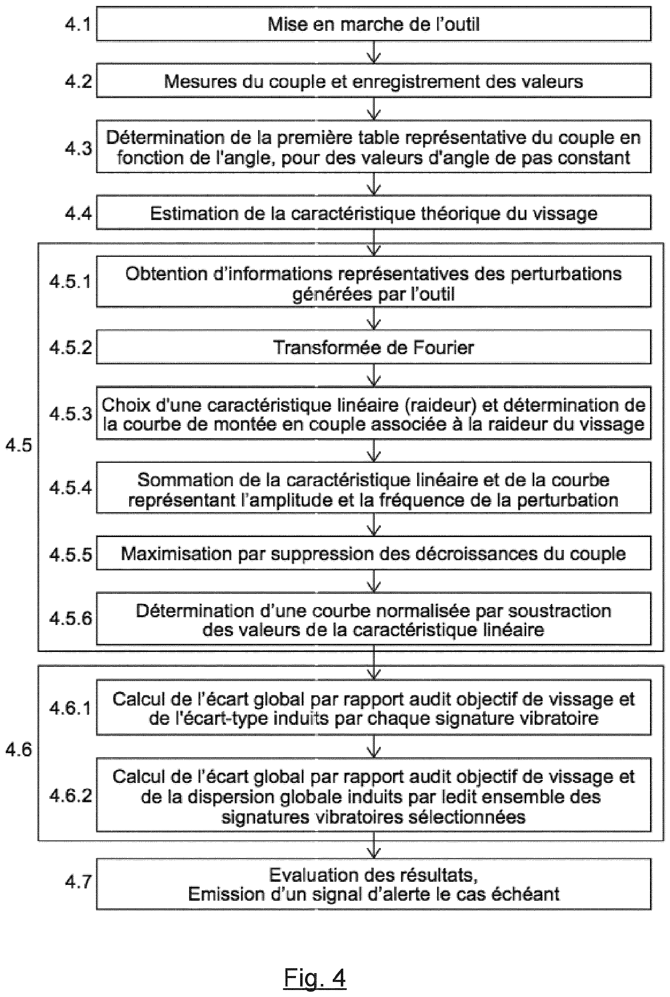

Selon les résultats d'estimation, le procédé, objet de l'invention, comporte une étape d'émission d'un signal d'alerte lorsque le contrôleur 6 détecte que la dispersion ou l'écart par rapport à la consigne des serrages ne répond plus aux exigences de production. Cette alerte répond à des contraintes de qualité, mais également de sécurité. Une alerte peut également être générée lors de la détection d'une amplitude de perturbation anormale d'un composant, en vue par exemple d'effectuer un diagnostic. Ceci peut notamment être restitué sous la forme d'un tableau présentant les dispersions et les écarts pour chaque perturbation, tel qu'expliqué plus en détail par la suite, en relation avec l'étape 4.7 du procédé de la **Fig. 4.**

Il est également possible, lors d'un test de maintenance, d'estimer la dispersion et l'écart à la consigne des serrages de la visseuse pour des raideurs usuelles de test, permettant ainsi un contrôle rapide de l'outil.

On peut noter que cette estimation ne prend pas en compte certains effets de la visseuse telle que l'insuffisance de freinage du moteur au moment de l'atteinte de l'objectif de serrage. Il est en effet peu aisé, et peu utile, de déterminer ce qui se passe après l'arrêt du moteur.

Un des aspects de l'invention consiste à calculer ce que serait la dispersion d'un outil de vissage et son écart moyen par rapport à l'objectif de serrage à partir des perturbations détectées sur le signal produit par son capteur 51 de couple. Cette évaluation peut être réalisée au cours d'un seul serrage effectué sur une chaîne de fabrication par exemple. Cette évaluation est donc beaucoup plus rapide que celle consistant à réaliser un diagnostic nécessitant généralement plusieurs dizaines de serrages sur un banc de test.

Des exemples de procédé de l'invention, pouvant être mis en œuvre sur un microprocesseur et/ou dans un ordinateur, notamment dans l'outil, le terminal et/ou le serveur, sont décrits ci-après.

*3. exemples de procédé de contrôle de vissage*

*3.0 Glossaire*

Dans le cadre de la présente description et des revendications :

- « première table » est une table de doublets comprenant chacun une valeur d'angle et une valeur de couple. Une telle première table est représentative de la montée en couple du vissage d'une vis ;
- « deuxième table » est une table contenant une série de valeurs représentative de la caractéristique vraie de la vis en fonction du pas angulaire ;
- « troisième table » est une table de valeurs présentant le couple en fonction de l'angle. Une telle troisième table est représentative des perturbations induites par la visseuse lors de la montée en couple du vissage ;
- « troisième table de vissage unitaire » est une troisième table obtenue à partir d'un vissage donné. Au moins deux troisièmes tables de vissage unitaire sont prises en compte, appelées troisième table d'un premier vissage et troisième table d'un deuxième vissage, selon le procédé selon l'invention ;
- « troisième table de vissage tronquée » est une troisième table de vissage unitaire de laquelle des données relatives à une ou plusieurs mesures sont supprimées ;
- « troisième table intermédiaire » est une troisième table contenant des données issues d'au moins deux troisièmes tables de vissage unitaire et/ou troisièmes tables de vissage tronquées ;
- « troisième table agrégée » est une troisième table contenant des données issues d'au moins deux troisièmes tables de vissage unitaire et/ou troisièmes tables de vissage tronquées comprenant un nombre de valeurs considéré suffisant pour effectuer une analyse des perturbations induites par la visseuse ;
- « troisième table agrégée candidate » ou « troisième table agrégée sélectionnée » est une troisième table sélectionnée parmi au moins deux « troisièmes tables agrégées » selon un critère d'optimisation.

*3.1 Première mise en œuvre d'un procédé de contrôle de vissage*

En relation avec la **Fig.4,** une première mise en œuvre va maintenant être décrit. La **Fig. 4** présente un ordinogramme des principales étapes pour la mise en œuvre d'un procédé de contrôle d'un niveau de qualité de vissage d'une visseuse, par rapport à un objectif de vissage prédéterminé, selon un premier exemple de réalisation.

A l'étape 4.1, l'outil, une visseuse par exemple, est mis en marche et effectue un travail selon une recette de vissage par exemple. Au cours du travail, les capteurs mesurent la valeur du couple (capteur 51) et l'angle (capteur 52) en référençant ces mesures par rapport au temps. Les mesures sont prises toutes les millisecondes par exemple (étape 4.2). Les valeurs des capteurs 51 et 52 sont transmises au contrôleur 6.

Le contrôleur 6 enregistre dans sa mémoire les valeurs de mesures et les traite dans le but de produire une table de doublets de valeurs de couple et d'angle en fonction du temps, par exemple à des intervalles de temps prédéterminés. Cette table est appelée « table brute ».

A l'étape 4.3, Le contrôleur détermine une table représentative du couple en fonction de l'angle de vissage, pour des valeurs d'angle de pas constant, pour élaborer une première table de doublets représentative de la montée en couple du vissage d'au moins une vis, chaque doublet comprenant une valeur d'angle et une valeur de couple. Cette étape consiste à :

- déterminer (I) un pas angulaire, qui peut être choisi de façon arbitraire, et par exemple correspondre à un pas moyen se situant entre deux valeurs. Il correspond dans ce dernier cas à l'écart entre l'angle final et l'angle initial, divisé par le nombre de points entre les deux :

$$\Delta\theta = \frac{\theta_n - \theta_0}{n}$$

Ainsi, chaque nouvel angle se calcule de la manière suivante :

$$\theta'_i = i \times \Delta\theta \;;$$

- Calculer (II) les échantillons de couple pour chaque nouvel angle défini. Pour effectuer ce deuxième calcul (II). Selon une première approche, ce calcul peut mettre en œuvre une interpolation linéaire entre 2 valeurs de couple de la première série :

$$C'_i = C_i + \frac{(C_{i+1} - C_i) \times (\theta'_i - \theta_i)}{\theta_{i+1} - \theta_i}$$

D'autres approches, notamment par interpolation polynomiale de la première série de mesures, sont également utilisables.

A l'issue de l'étape 4.3, le contrôleur 6 établit une série de valeurs S1 qui représente la valeur du couple en fonction du pas angulaire (chaque valeur de couple étant calculés pour des pas angulaires constants).

On obtient ainsi la première table, représentative de la relation :

$$C_{capteur} = f(\alpha)$$

obtenue à partir des doublets représentative de la montée en couple du vissage d'au moins une vis, enregistrés dans la première table. Cette première table permet de s'affranchir de la vitesse de rotation de l'outil qui peut varier durant le vissage.

A l'étape 4.4, la caractéristique théorique de l'assemblage est estimée. Cette étape permet de déterminer une image de la caractéristique vraie de la vis en calculant une caractéristique théorique.

Plusieurs méthodes de traitement numérique (filtrage) sont possibles, tels que :

- régression linéaire appliquée à la table de couples en fonction de l'angle.
- régression polynomiale appliquée à la table de couple en fonction de l'angle.
- filtre passe-bas ayant comme fréquence de coupure la valeur du défaut ayant la fréquence la plus faible. Cette méthode permet que la partie utile des perturbations soit conservée en supprimant notamment les éventuels défauts de la vis, qui peut ne pas être linéaire.

A l'issue de cette étape, le contrôleur 6 met à jour une deuxième table contenant une série de valeurs S2 représentative de la caractéristique vraie de la vis en fonction du pas angulaire (à pas d'angle constant), cette série de valeur peut s'exprimer par la formule :

$$C_{\text{caractéristique vraie}} = g(\alpha)$$

A l'étape 4.5, la part du signal résultant des perturbations générées par l'outil peut être à ce moment isolée et quantifiée. Selon une mise en œuvre, cette étape se décompose en plusieurs sous-étapes :
1°] L'étape 4.5.1 consiste à ne retenir de la première table que les informations représentatives des perturbations générées par l'outil.

Pour le même angle, les valeurs de couple de ladite seconde table sont soustraites aux valeurs de couple correspondantes de la première table. Le résultat de ces soustractions est divisé par les valeurs de couple correspondantes de la seconde table, ceci exprimé en pourcent.

$$\Delta C\% = (f(\alpha) - g(\alpha))/g(\alpha)$$

On détermine ainsi les valeurs de la troisième table.

Dans un deuxième temps, à l'étape 4.5.2, la transformée de Fourrier discrète est calculée sur cette table afin de réaliser une analyse fréquentielle du signal et mettre en évidence les différentes perturbations qui apparaissent sous forme d'une raie caractérisée par une certaine fréquence. Le tableau ci-dessous présente sous la forme d'un exemple des valeurs représentatives de la fréquence et de l'amplitude de chaque perturbation détectée.

| Perturbation | Fréquence | Amplitude |
| --- | --- | --- |
| 1 | f1 | A1 |
| 2 | f2 | A2 |
| ------ | ------ | ------ |
| n | fn | An |

n varie par exemple de 1 à 1000.

On peut noter que selon ce mode de calcul, les erreurs sont considérées comme indépendantes du couple, ou influe peu sur sa valeur.

2°] A la sous-étape 4.5.3, une caractéristique linéaire ayant une raideur déterminée est choisie. Cette raideur est un paramètre d'entrée défini de façon normative, par exemple : angle franc (30°) - angle élastique (360°), ou entre les deux (notamment, cette caractéristique peut être la caractéristique vraie de l'assemblage réel, définie par la deuxième table). L'angle de serrage à simuler $\alpha_{\text{vis}}$ est sélectionné.

La dispersion est évaluée pour chaque fréquence fi présente dans le tableau ci-dessus. La table de montée du couple en fonction de l'angle associée à cette raideur s'exprime de la façon suivante :

$$T_R(\alpha) = \frac{\alpha}{\alpha_{\text{vis}}}.C_{\text{consigne}}$$

où :

- $T_R$ est le couple de la caractéristique linéaire,
- $\alpha_{\text{vis}}$ est l'angle total du vissage (de 0% à 100% du couple, en degré),
- $C_{\text{consigne}}$ est le couple consigne (en Nm).

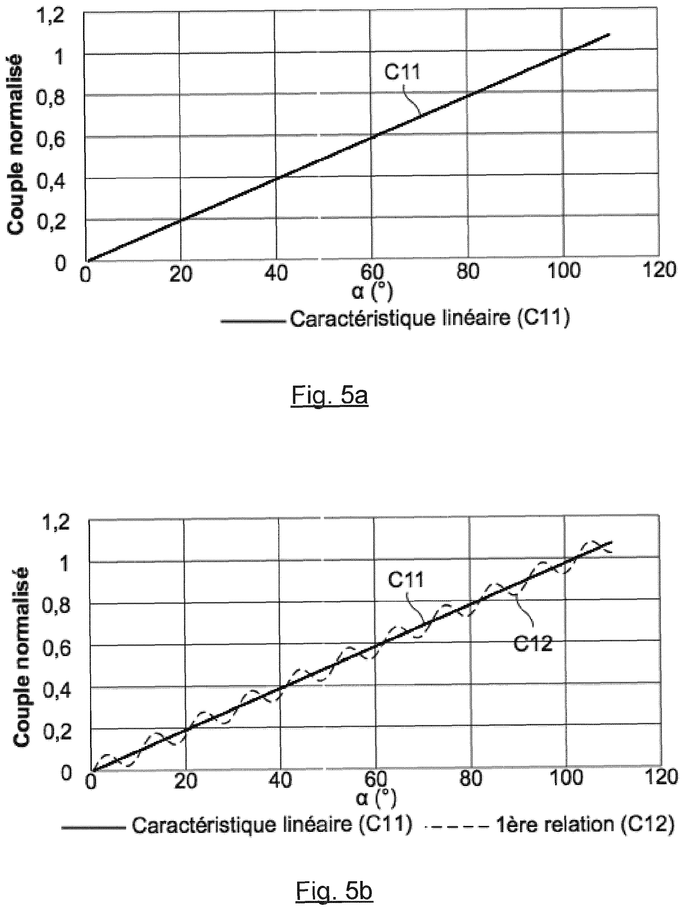

Dans cette mise en œuvre, le couple réel est considéré comme parfait, c'est-à-dire que le couple augmente proportionnellement avec l'angle **(Fig. 5a)**. La courbe C11 illustrant cette caractéristique linéaire est un segment de droite dont la pente est fonction de l'angle de serrage. 3°] Lors de la sous-étape 4.5.4, le contrôleur 6 détermine une première relation mathématique Tc obtenue par la somme de la courbe C11 (la caractéristique linéaire) et de la courbe sinusoïdale dont l'amplitude et la fréquence sont celles de la perturbation considérée. Le calcul de cette relation d'ajout de la sinusoïde est mis en œuvre pour chaque perturbation.

Ceci exprime une première relation :

$$T_c(\alpha) = T_R(\alpha) + C_{consigne}.\,A.\sin(2.\,\pi.\,f.\,\alpha)$$

où :

- $T_c$ est le couple mesuré par le capteur 5 (en Nm),
- A est l'amplitude relative du défaut par rapport au couple consigne $C_{consigne}$, issue de la FFT (%),
- f est la fréquence de la perturbation (deg-1).

Un exemple de courbe C12 produite par cette première relation mathématique est présenté à la **Fig. 5b.**

4°] A la sous-étape 4.5.5, le contrôleur 6 détermine une seconde relation mathématique, qui exprime le fait que l'arrêt de l'outil ne prend pas en compte les décroissances de couple. Cette seconde relation Ts découle de la première relation et s'exprime de la façon suivante :

$$T_S(\alpha) = \max_{0 \le x \le \alpha} T_c(x)$$

Les valeurs de couple sont maximisées de façon à supprimer les décroissances, produisant ainsi une deuxième relation exprimant un couple en fonction d'un angle. En d'autres termes, Ts est une représentation fictive d'un couple qui va s'en cesse croissant, c'est à dire pour lequel l'arrêt de l'outil ne peut être activé sur une valeur de couple inférieur à une valeur précédemment atteinte lors du travail. Selon cette représentation fictive, l'arrêt de l'outil n'intervient pas lors d'une diminution du couple, mais lors de l'atteinte d'une valeur « maximum ».

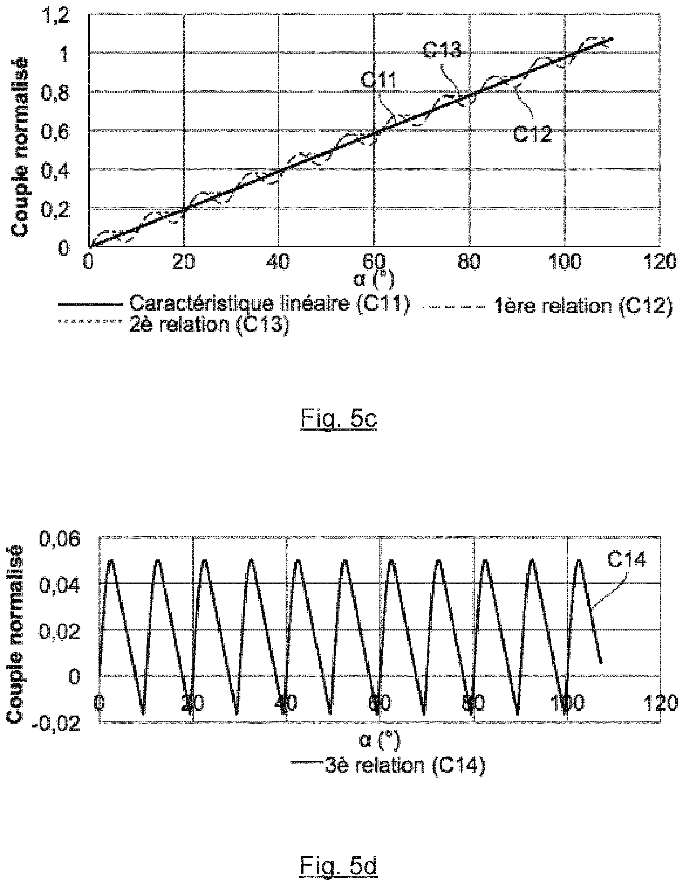

Un exemple de courbe C13 illustrant cette deuxième relation mathématique est présenté à la **Fig. 5c.**

5°] Lors de la sous-étape 4.5.6, le contrôleur 6 déduit de cette deuxième relation une troisième relation qui correspond à une soustraction, aux valeurs obtenues à l'aide de la deuxième relation, et des valeurs correspondantes de la caractéristique linéaire. Cette troisième relation s'exprime mathématiquement de la façon suivante :

$$T_S(\alpha) - T_R(\alpha)$$

La table ainsi obtenue est illustrée par la courbe C14 de la **Fig. 5d.**

Ainsi, à l'issue des cinq étapes 4.5.1 à 4.5.6, qui sont décrites ci-dessous selon un exemple de réalisation, le contrôleur 6 peut déterminer la dispersion et/ou l'écart par rapport à l'objectif résultant de chaque perturbation générée par l'outil (étape 4.6).

Dans un premier temps, à l'étape 4.6.1, le contrôleur 6 évalue l'influence individuelle des perturbations sur la dispersion et/ou l'écart de vissage par rapport à l'objectif.

Selon un cas particulier, lorsque l'on sélectionne la caractéristique linéaire à l'étape 4.5.3, le calcul de la dispersion et de l'écart par rapport à l'objectif s'effectue en considérant une raideur d'assemblage qui peut être choisie indépendamment de la raideur de l'assemblage sur lequel ont été recueillies les valeurs de la première série. Selon une variante de réalisation, plusieurs calculs de dispersions et d'écarts sont effectués en utilisant plusieurs raideurs, par exemple les raideurs normalisées utilisées pour définir un assemblage franc et un assemblage élastique ou une raideur propre à l'application.

Au cours du calcul de la dispersion et l'écart par rapport à l'objectif, les perturbations engendrées par l'outil sont considérées une par une de façon à évaluer pour chaque perturbation, sa contribution à la perturbation globale.

Selon une mise en œuvre, l'évaluation de l'influence individuelle des perturbations sur la dispersion et de l'écart de vissage par rapport à l'objectif s'effectue à l'issue des étapes suivantes :

- calcul de la moyenne de cette différence sur une période. Cette moyenne est représentative de l'écart entre le couple généré par l'outil et l'objectif de couple de serrage. Elle est exprimée de la façon suivante :

$$\bar{x} = C_{consigne} - f \int_0^{\frac{1}{f}} (T_S(\alpha) - T_R(\alpha)) d\alpha$$

- calcul de l'écart-type de cette troisième relation. Cet écart-type est représentatif de la dispersion introduite par la raie sur le couple généré par l'outil. Elle est exprimée de la façon suivante :

$$\sigma = \frac{1}{\overline{x}} \times \sqrt{\int_0^{\frac{1}{f}} \left(T_S(\alpha) - (T_R(\alpha) - C_{consigne} + \overline{x})\right)^2 d\alpha}$$

Ces calculs sont répétés pour chaque valeur de n (la plupart sont proches de 0, et non significatives. Les valeurs plus élevées correspondent à des défauts éventuels. Connaissant les fréquences caractéristiques de chaque élément de l'outil, il est possible de déterminer le ou les éléments défaillants).

Dans un second temps, à l'étape 4.6.2, le contrôleur 6 évalue l'influence de l'ensemble des perturbations sur la dispersion et l'écart de vissage par rapport à l'objectif, ceci pour la ou les raideurs d'assemblage précédemment choisies.

Selon un exemple de réalisation, le calcul s'effectue en réalisant les calculs suivants :

- Les moyennes sont additionnées, et la valeur ainsi calculée est représentative de l'écart entre le couple généré par l'outil et l'objectif de couple de serrage pour l'ensemble des raies et donc des perturbations induites par l'outil. Elle est exprimée de la façon suivante :

$$x_{moy} \geq C_{consigne} - \sum_{i=1}^{n} \left(\overline{x}_i - C_{consigne}\right)$$

Avec i variant de 1 à n, i représentant chacune des perturbations.

- les écart-types sont agrégés pour donner une valeur représentative de la dispersion induite par l'ensemble des raies. Elle est exprimée de la façon suivante (formule 1) :

$$6\sigma \leq \sqrt{\sum_{i=1}^{n} (6\sigma_i)^2}$$

En effet :

$$\sigma_{X+Y} = \sqrt{\sigma_X{}^2 + \sigma_Y{}^2 + 2\sigma_X\sigma_Y\rho(X,Y)}$$

Or :

$$-1 \leq \rho(X,Y) \leq 1$$

Donc :

$$\sigma_X{}^2 + \sigma_Y{}^2 + 2\sigma_X\sigma_Y\rho(X,Y) \leq \sigma_X{}^2 + \sigma_Y{}^2 + 2\sigma_X\sigma_Y$$

Sachant que :

$$\sigma_X{}^2 + \sigma_Y{}^2 + 2\sigma_X\sigma_Y = (\sigma_X+\sigma_Y)^2$$

On obtient :

$$\sigma_{X+Y} \leq \sqrt{\sigma_X{}^2 + \sigma_Y{}^2}$$

Ce calcul (formule 1) permet donc de vérifier la présence d'une majoration de la dispersion par la somme du carré des dispersions calculées pour chaque défaut.

Selon une mise en œuvre particulière et par sécurité, la valeur obtenue est majorée par rapport à la valeur réelle.

A l'étape 4.7, des tests sont effectués afin de déterminer si la dispersion et l'écart se situent dans une fourchette acceptable et dans le cas contraire, une alerte est émise. Les résultats peuvent être délivrés dans un tableau du type :

| Angle | Dispersion | | Ecart | |
|---|---|---|---|---|
| | Evaluation | Seuil | Evaluation | Seuil |
| 30° | $\sigma_{30}$ | | $\overline{x}_{30}$ | |
| 360° | $\sigma_{360}$ | | $\overline{x}_{360}$ | |
| Angle spécial | $\sigma_{spécial}$ | | $\overline{x}_{spécial}$ | |

A l'aide d'un tel tableau, il est possible d'extraire la dispersion et l'écart pour un angle donné (cas d'un diagnostic, pour une application souhaitée du client, on analyse pour un angle donné. Ceci permet de repérer un éventuel composant défaillant).

Le tableau ci-dessous présente les dispersions et les écarts pour chaque perturbation :

| Perturbation | Dispersion | | Ecart | |
|---|---|---|---|---|
| | Evaluation | Seuil | Evaluation | Seuil |
| 1 | $\sigma_1$ | | $\overline{x}_1$ | |
| 2 | $\sigma_2$ | | $\overline{x}_2$ | |
| ------ | ------ | | ------ | |
| n | $\sigma_n$ | | $\overline{x}_n$ | |

Ce tableau permet l'identification des composants générant une imprécision anormale, chacune des perturbations 1 à n étant associée à l'un de ces composants.

L'exemple de réalisation du procédé de contrôle d'un niveau de qualité du travail d'un outil qui vient d'être décrit dans les pages précédentes est considéré comme le plus précis.

Une autre mise en œuvre va maintenant être décrit sous la forme d'un autre exemple. Cette mise en œuvre décrit une méthode plus simple mais sensiblement moins précise.

*3.2 Deuxième mise en œuvre d'un procédé de contrôle de vissage*

Cette autre mise en œuvre n'intègre pas de calcul de FFT et de ce fait n'impose pas de conditions particulières sur l'enregistrement de la table de couple.

Dans un premier temps et de manière identique à la première mise en œuvre, la table de couple exprimée en fonction de l'angle est calculée et enregistrée. Il résulte de cette étape une série de valeurs, formant la première table, et exprimant :

$$C_{capteur} = f(\alpha)$$

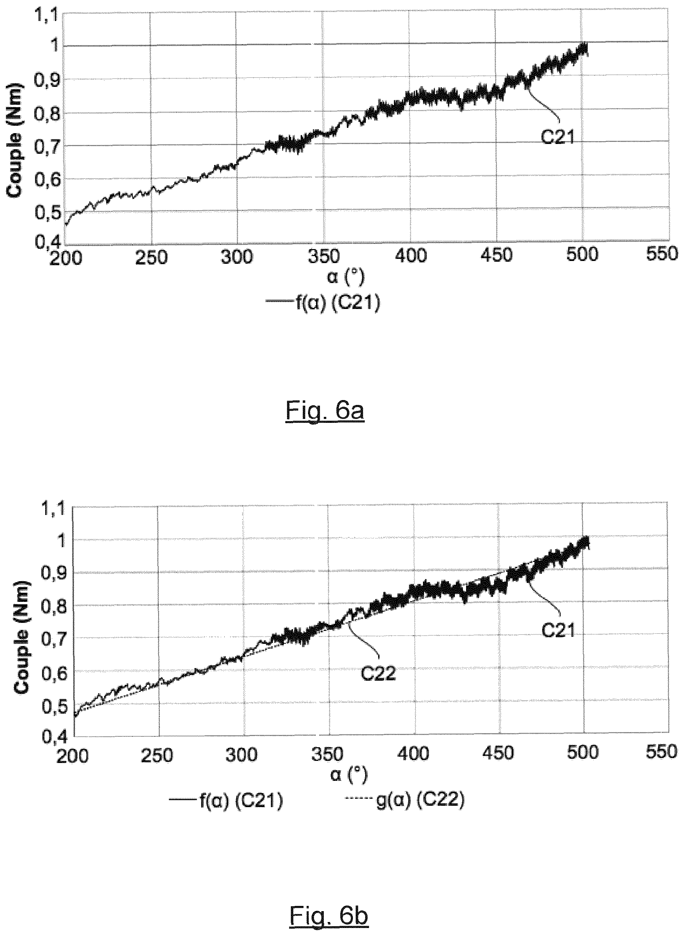

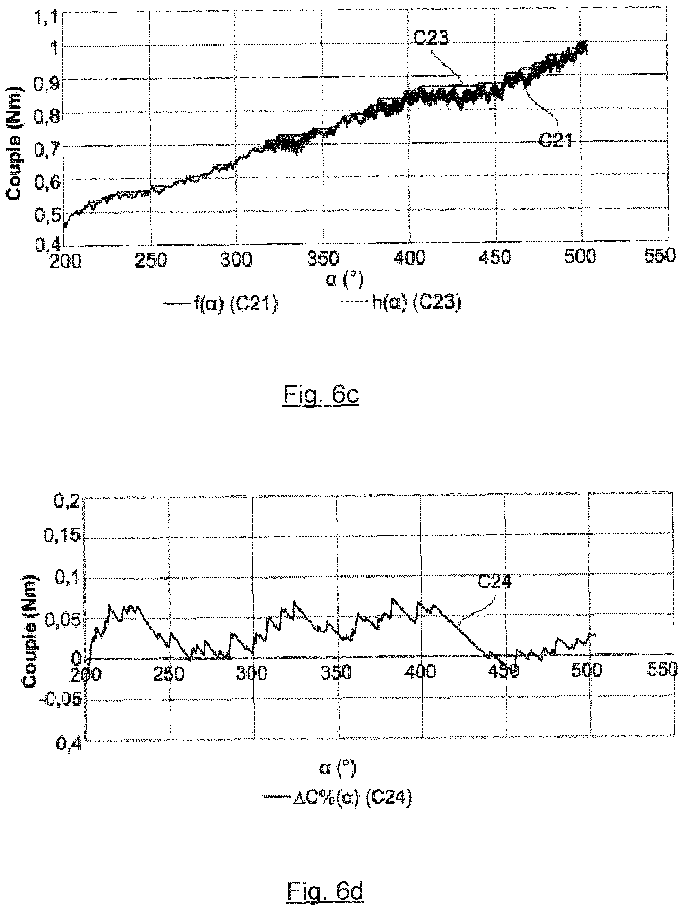

La figure 6.1 illustre un exemple de courbe C21 représentant cette première table.

Dans un deuxième temps et de manière identique à la première mise en œuvre, le contrôleur 6 détermine la caractéristique théorique de la vis, image de la caractéristique vraie. Il résulte de cette étape une série de valeurs, formant la deuxième table, et exprimant :

$$C_{caractéristique\ vraie} = g(\alpha)$$

La figure 6.2 illustre un exemple de courbe C22 représentant cette deuxième table, superposée à la courbe C21.

Dans un troisième temps et de manière différente à la première mise en œuvre, le contrôleur 6 isole la part du signal résultant des perturbations générées par l'outil. Ce troisième temps se décompose en plusieurs étapes :

I] détermination à partir de la table de couple transmise par l'outil en fonction de l'angle, d'une première relation qui exprime le fait que l'arrêt de l'outil ne prend pas en compte les décroissances de couple. La table ainsi déterminée s'exprime de la façon suivante :

$$h(\alpha) = \max_{0 \leq x \leq \alpha} f(x)$$

Avec h($\alpha$) le couple (Nm) calculé par le contrôleur 6 qui traduit qu'un arrêt de l'outil ne peut être activé sur une valeur de couple inférieur à une valeur précédemment atteinte lors du serrage. Comme pour la méthode précédente, l'outil s'arrête toujours au niveau d'un maximum.

La figure 6.3 illustre un exemple de courbe C23 représentant cette table, superposée à la courbe C21.

II] détermination d'une deuxième relation qui exprime les différences entre la première relation et la caractéristique théorique. En d'autres termes, cette deuxième relation fournit en fonction de l'angle la différence entre la table de couple calculée à l'étape précédente et la caractéristique théorique de la vis (deuxième table, S2). Il en résulte une série de valeurs traduisant :

$$\Delta C = h(\alpha) - g(\alpha)$$

III] Détermination d'une troisième relation obtenue en normalisant la deuxième relation par rapport à la caractéristique théorique, cette étape consiste à faire le rapport entre la différence et la caractéristique théorique de la vis. Il en résulte une série de valeurs, constituant la troisième table et traduisant :

$$\Delta C\%(\alpha) = (h(\alpha) - g(\alpha))/g(\alpha)$$

La figure 6d illustre un exemple de courbe C24 représentant cette troisième table.

Dans un quatrième temps, la dispersion et l'écart par rapport à l'objectif résultant de ladite part du signal qui résulte lui-même des perturbations générées par l'outil sont calculés. Cette étape permet de calculer la dispersion et l'écart par rapport à l'objectif de serrage qui sont induits par l'ensemble des perturbations.

La moyenne de cette différence sur la globalité du signal est d'abord calculée. Cette moyenne est représentative de l'écart entre le couple généré par l'outil et l'objectif de couple de serrage. Elle peut s'exprimer par l'équation suivante :

$$\bar{x} = C_{consigne} - \frac{1}{n} \sum_{y=1}^{n} \Delta C\%(y)$$

L'écart-type de cette troisième relation est ensuite calculé. Cet écart-type est représentatif de la dispersion introduite sur le couple mesuré par l'outil. Il peut s'exprimer par l'équation suivante :

$$\sigma = \frac{1}{\bar{x}} \times \sqrt{\frac{1}{n} \sum_{y=1}^{n} \left(\Delta C\%(y) - C_{consigne} + \bar{x}\right)^2}$$

où n représente ici tous les points de la mesure effectués pendant le travail de l'outil.

A la différence de la première mise en œuvre dans lequel n'est prise en compte qu'une seule période car elles sont toutes considérées identiques, la deuxième mise en œuvre prend en compte chaque oscillation. Cette seconde méthode présente l'avantage de prendre en considération les disparités éventuelles entre les oscillations.

Dans un cinquième temps et de manière analogue à la première mise en œuvre, les résultats d'évaluation et une alerte éventuelle est/sont émise(s).

Cette deuxième mise en œuvre est cependant sensiblement moins précise car elle ne permet pas de réaliser des résultats pour chaque fréquence de perturbation, et donc de tester chaque composant individuellement.

La présente invention permet ainsi notamment de déterminer si un outil est capable ou non de réaliser le travail qui lui est demandé, en temps réel et sur la chaîne de travail. L'invention peut également être utilisée pour déterminer à la vue des résultats de mesure, si le travail, un vissage par exemple, a été correctement réalisé ou non. Les valeurs caractérisant les perturbations détectées et calculées lors d'un travail avec la pièce produite, il est possible de réaliser un contrôle qualité *a posteriori* des pièces produites et ainsi remettre en cause la qualité de certaines pièces s'il s'avère que l'amplitude des perturbations étaient trop importantes.

Le procédé de l'invention permet notamment de fournir, selon les besoins et les applications, au moins un des éléments suivants :

- une alerte si la dispersion ou l'écart à la consigne des serrages ne répond plus aux exigences de production, ceci éventuellement lors de l'usage de la visseuse en production (aspect qualité / sécurité) ;
- une estimation de la dispersion et un écart à la consigne des serrages de la visseuse pour les raideurs usuelles de test, ceci éventuellement lors d'un test de maintenance (aspect contrôle rapide) ;
- la détection d'une amplitude de perturbation anormale d'un composant et la génération d'une alerte (aspect diagnostic).

L'invention permet ainsi, en particulier :

- de prévenir en temps réel l'utilisateur d'une l'incapacité de la visseuse à réaliser correctement le travail par exemple lors de l'utilisation de l'outil sur chaine d'assemblage ;
- de fournir rapidement, en temps réel, une estimation de la dispersion et l'écart par rapport à un objectif de serrage ;
- de générer une alerte si un composant de la visseuse se dégrade de façon anormale, notamment pour permettre à l'assembleur de l'outil ou au technicien de maintenance d'identifier le ou les composants défaillants.

Bien que décrits à travers un certain nombre d'exemples de réalisation détaillés, le procédé proposé et les dispositifs correspondants comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent. De plus, différents aspects et caractéristiques décrits ci-dessus peuvent être mis en œuvre ensemble, ou séparément, ou bien substitués les uns aux autres, et l'ensemble des différentes combinaisons et sous-combinaisons des aspects et caractéristiques font partie de la portée de l'invention. En outre, il se peut que certains dispositifs décrits ci-dessus n'incorporent pas la totalité des modules et fonctions prévus pour les mises en œuvre décrites.

*4. modes de réalisation du procédé de l'invention*

Comme indiqué précédemment, un angle minimum de rotation de 720° (au moins deux tours pour analyser les basses fréquences) de l'arbre de sortie est généralement souhaitable. Lorsqu'un vissage unique ne couvre pas cette plage angulaire minimale, il est donc souhaitable de prendre en compte des mesures relevées à partir de deux, ou plus, vissages.

Les données obtenues à partir de ces différents vissages doivent ensuite être combinés, ou concaténés, pour mettre en œuvre la technique décrite ci-dessus, et construire notamment les tables décrites ci-dessus. Cette concaténation ne peut cependant être mise en œuvre sans traitement préalable, la technique décrite ci-dessus prenant en compte la périodicité du signal représenté par les mesures et traitements.

Ainsi, l'invention propose un procédé de contrôle d'un niveau de qualité de vissage d'une visseuse par rapport à un objectif de vissage prédéterminé tenant compte d'une série de données représentatives de la montée en couple d'au moins deux vissages de vis à une fréquence angulaire prédéterminée. Il comprend les étapes suivantes :

- obtention d'une sous-série de données pour chacun desdits vissages, correspondants à une sous-série de mesures ;
- agrégation optimisée desdites sous-séries, pour former ladite série de données, comprenant une étape de suppression de données correspondant à un nombre de mesures déterminé selon un critère d'optimisation de périodicité ; et
- analyse de ladite série de données, délivrant ladite au moins une information représentative d'une dispersion et/ou d'un écart par rapport audit objectif de vissage, résultant de perturbations induites par ladite visseuse.

En d'autres termes, la concaténation, ou l'agrégation, de données issues de deux (ou plus) sous-séries de mesures ne conserve pas toutes les données disponibles, bien que l'objectif premier soit de disposer d'une plage angulaire suffisante. Au contraire, certaines données sont supprimées, de façon que le signal résultant du traitement des données conservées présente des caractéristiques de périodicité efficace pour la détermination des informations de dispersion et/ou d'écart.

Cette suppression a pour but, en substance, de fournir un signal final qui soit le plus périodique possible ou, en d'autres termes, que la liaison entre les deux portions de signal, correspondant aux deux vissages pris en compte, soit le plus linéaire possible (c'est-à-dire que les pentes des deux portions de signal, au niveau de leur jonction, soit les plus proches possibles l'une de l'autre, de façon que cette jonction soit aussi « lisse » que possible, sans introduire de transition brusque qui perturberait l'analyse).

Deux modes de réalisation sont décrits ci-après.

*4.1 Premier mode de réalisation de l'invention*

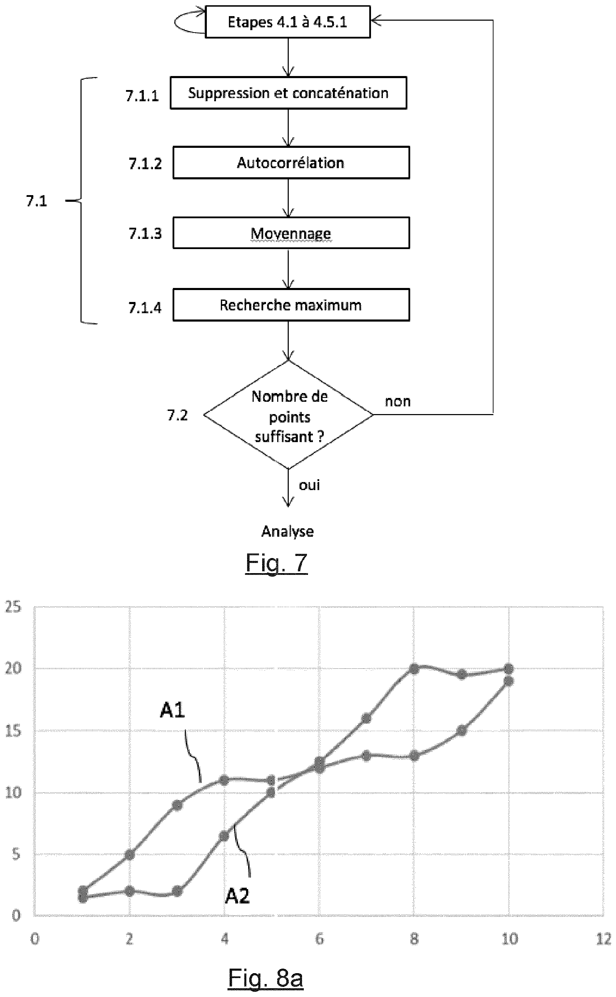

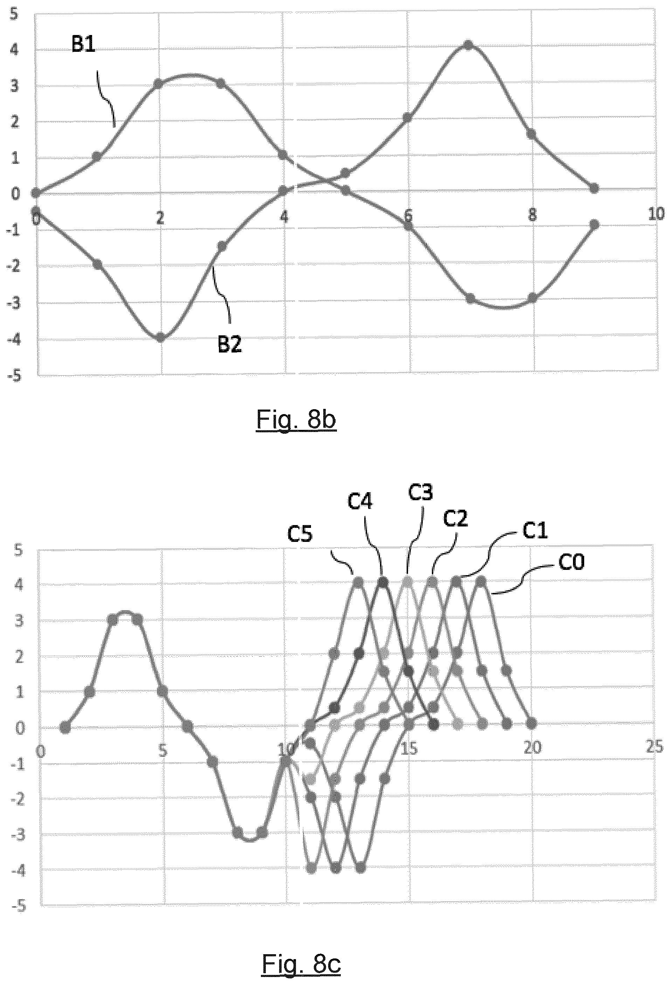

En relation avec la **Fig. 7,** un premier mode de réalisation va maintenant être décrit. La **Fig. 7** présente un ordinogramme des principales étapes pour la mise en œuvre d'un procédé de contrôle d'un niveau de qualité de vissage d'une visseuse, par rapport à un objectif de vissage prédéterminé, selon un troisième exemple de réalisation. Certaines étapes de ce premier mode de réalisation sont par ailleurs illustrées plus avant via les courbes représentées sur les **Fig. 8a, Fig. 8b** et **Fig. 8c.**

Plus particulièrement, lors de la mise en œuvre de l'étape 4.3 (selon l'une quelconque des mises en œuvre précitées au paragraphe 5.3), une série de doublets représentative de la montée en couple du vissage d'une première vis vissée par la visseuse de la **Fig. 1** est obtenue (par exemple après mise en œuvre des étapes 4.1 et 4.2 décrites ci-dessus). Chaque doublet comprend une valeur d'angle et une valeur de couple. De la sorte, une première table de valeurs associée au premier vissage est constituée. La première table ainsi obtenue est illustrée par la courbe A1 de la **Fig. 8a.**

Lors de la mise en œuvre de l'étape 4.4 (selon l'une quelconque des mises en œuvre précitées), une deuxième table de valeurs, associée au premier vissage, est déterminée à partir de la première table de valeurs. La deuxième table de valeurs présente le couple en fonction de l'angle, et est représentative de la caractéristique vraie de la première vis.

Lors de la mise en œuvre de l'étape 4.5.1 (selon l'une quelconque des mises en œuvre précitées), une troisième table de valeurs présentant le couple en fonction de l'angle et représentative des perturbations induites par la visseuse lors de la montée en couple du vissage de la première vis, est déterminée à partir des première et deuxième tables. La troisième table associée au premier vissage ainsi obtenue est illustrée par la courbe B1 de la **Fig. 8b.**

Cependant, contrairement aux deux premières mises en œuvre décrites ci-dessus, les étapes 4.3 (par exemple après mise en œuvre des étapes 4.1 et 4.2 décrites ci-dessus), 4.4 et 4.5.1 sont mises en œuvre pour au moins un deuxième vissage de vis par la visseuse. De la sorte, sont obtenues une première table de valeurs associée au deuxième vissage (illustrée par la courbe A2 de la **Fig. 8a),** une deuxième table de valeurs associée au deuxième vissage, ainsi qu'une troisième table associée au deuxième vissage (illustrée par la courbe B2 de la **Fig. 8b).**

En effet, les défauts recherchés sur les mesures sont liés à la visseuse. Ainsi, quand bien même des vis différentes sont vissées, le défaut se retrouve sur les séries de mesures effectuées lors des différents vissages de vis mis en œuvre. Ainsi, afin de pouvoir procéder à une analyse fine des mesures effectuées, par exemple sur la base d'un nombre suffisant de points de mesures, lors d'une étape 7.1, une agrégation optimisée de la troisième table associée au premier vissage et de la troisième table associée au deuxième vissage est mise en œuvre. Une telle agrégation optimisée comprend une suppression, dans la troisième table associée au deuxième vissage, d'un nombre de valeurs déterminé selon un critère d'optimisation de périodicité. Une troisième table agrégée candidate est ainsi délivrée à l'issue de la mise en œuvre de l'étape 7.1.

Plus particulièrement, lors d'une sous-étape 7.1.1, la troisième table associée au premier vissage et une version tronquée de la troisième table associée au deuxième vissage, dite troisième table tronquée, sont concaténées de sorte à former une table agrégée intermédiaire. La troisième table tronquée résulte d'une suppression d'un nombre donné de valeurs successives correspondant à des angles d'amplitude minimale parmi les valeurs de la troisième table associée au deuxième vissage. En d'autres termes, ce sont les premières valeurs de la troisième table associée au deuxième vissage que l'on supprime ici.

Par ailleurs, la suppression, dans la troisième table associée au deuxième vissage, et la concaténation avec la troisième table associée au premier vissage sont répétées pour différentes valeurs du nombre donné de valeurs supprimées. De la sorte un jeu de tables agrégées intermédiaires est obtenu.

Reconsidérant l'exemple des courbes (et vecteurs de valeurs associées) B1 et B2 de la **Fig. 8b** représentant les troisièmes tables associées respectivement au premier et au deuxième vissage, la formule suivante est par exemple utilisée pour obtenir les valeurs de chaque table agrégée intermédiaire (les différentes tables agrégées intermédiaires sont indexées par x ici).

$$\forall \, x \; entier \in \left[0; \frac{longueurB_2}{2}\right], \forall a \; entier \in [1; longueurB_1 + longueurB_2 - x] \,,$$

$$C_x(a) = \begin{cases} B_1(a) \; si \; a \leq longueur \, B_1 \\ B_2(a - longueur \, B_1 + x) \; si \; longueur \, B_1 < a < longueur \, B_1 + longueur \, B2 - x \end{cases}$$

Les courbes C0 à C5 correspondant aux différentes tables agrégées intermédiaires du jeu de tables agrégées intermédiaires obtenu sont représentées sur la **Fig. 8c**.

En termes de valeurs numériques, les valeurs correspondant aux courbes B1 et B2 sont données dans le tableau suivant :

| Échantillon | B1 | B2 |
|---|---|---|
| 1 | 0 | -0,5 |
| 2 | 1 | -2 |

(suite)

| Échantillon | B1 | B2 |
|---|---|---|
| 3 | 3 | -4 |
| 4 | 3 | -1,5 |
| 5 | 1 | 0 |
| 6 | 0 | 0,5 |
| 7 | -1 | 2 |
| 8 | -3 | 4 |
| 9 | -3 | 1,5 |
| 10 | -1 | 0 |

Les valeurs numériques correspondant aux courbes C0 à C5 sont alors données dans le tableau suivant :

| Échantillon | C0 | C1 | C2 | C3 | C4 | C5 |
|---|---|---|---|---|---|---|
| 1 | 0 | 0 | 0 | 0 | 0 | 0 |
| 2 | 1 | 1 | 1 | 1 | 1 | 1 |
| 3 | 3 | 3 | 3 | 3 | 3 | 3 |
| 4 | 3 | 3 | 3 | 3 | 3 | 3 |
| 5 | 1 | 1 | 1 | 1 | 1 | 1 |
| 6 | 0 | 0 | 0 | 0 | 0 | 0 |
| 7 | -1 | -1 | -1 | -1 | -1 | -1 |
| 8 | -3 | -3 | -3 | -3 | -3 | -3 |
| 9 | -3 | -3 | -3 | -3 | -3 | -3 |
| 10 | -1 | -1 | -1 | -1 | -1 | -1 |
| 11 | -0,5 | -2 | -4 | -1,5 | 0 | 0 |
| 12 | -2 | -4 | -1,5 | 0 | 0,5 | 2 |
| 13 | -4 | -1,5 | 0 | 0,5 | 2 | 4 |
| 14 | -1,5 | 0 | 0,5 | 2 | 4 | 1,5 |
| 15 | 0 | 0,5 | 2 | 4 | 1,5 | 0 |
| 16 | 0,5 | 2 | 4 | 1,5 | 0 | |
| 17 | 2 | 4 | 1,5 | 0 | | |
| 18 | 4 | 1,5 | 0 | | | |
| 19 | 1,5 | 0 | | | | |
| 20 | 0 | | | | | |

En alternative, lors de la sous-étape 7.1.1, la troisième table associée au deuxième vissage et une version tronquée de la troisième table associée au premier vissage, dite troisième table tronquée, sont concaténées de sorte à former la table agrégée intermédiaire. Plus particulièrement, la troisième table tronquée résulte d'une suppression d'un nombre donné de valeurs successives correspondant à des angles d'amplitude maximale parmi les valeurs de la troisième table associée au premier vissage. En d'autres termes, ce sont les dernières valeurs de la troisième table associée au premier vissage que l'on supprime ici.

Par ailleurs, la suppression, dans la troisième table associée au premier vissage, et la concaténation avec la troisième table associée au deuxième vissage sont répétées pour différentes valeurs du nombre donné de valeurs supprimées, délivrant ainsi le jeu de tables agrégées intermédiaires dans cette alternative.

De retour à la **Fig. 7,** Lors d'une sous-étape 7.1.2, une autocorrélation est mise en œuvre pour chaque table agrégée intermédiaire du jeu de tables agrégées intermédiaires précédemment obtenue. De la sorte, un jeu correspondant de tables agrégées intermédiaires autocorrélées est délivré.

Reconsidérant l'exemple des courbes (et vecteurs de valeurs associées) C0 à C5 de la **Fig. 8c,** la formule suivante est par exemple utilisée pour calculer la fonction d'autocorrélation g(y,x) de chaque table agrégée intermédiaire (y est ici l'argument de chaque fonction d'autocorrélation, les différentes tables agrégées intermédiaires C0 à C5 étant indexées par *x*) :

$\forall\ y\ entier \in [0; longueur\ Cx]$,

$$g(y,x) = \frac{\sum_{i=0}^{(longueur\ Cx)-y-1} C_x(i+y) \times C_x(i)}{(longueur\ Cx) - y}$$

En pratique, cette opération consiste à faire la somme de la multiplication terme à terme du vecteur $C_x(i)$ avec une version décalée de la valeur y, $C_x(i+y)$.

Lors d'une sous-étape 7.1.3, chaque table agrégée intermédiaire autocorrélée est moyennée. Ainsi un jeu correspondant de valeurs moyennées est délivré.

Reconsidérant l'exemple des fonctions d'autocorrélation g(y,x) ci-dessus, la formule suivante est par exemple utilisée pour obtenir les valeurs moyennées en question :

$$h(x) = \frac{\sum_{j=1}^{G_x} g(j,x)}{G_x}$$

avec $G_x$ le nombre de valeurs dans le vecteur à moyenner. En termes de valeurs numériques associées aux courbes (et vecteurs de valeurs associées) C0 à C5 de la **Fig. 8c,** on obtient ainsi :

| x | 0 | 1 | 2 | 3 | 4 | 5 |
|---|---|---|---|---|---|---|
| h(x): | -4,778 | 2,236 | 2,417 | 3,147 | 3,953 | 3,95 |

Ainsi, une table agrégée intermédiaire dont la valeur moyennée correspondante est maximale parmi les valeurs moyennées est sélectionnée comme étant une troisième table agrégée candidate selon le critère d'optimisation de périodicité. Ainsi, la troisième table agrégée candidate correspond à la table agrégée intermédiaire présentant la plus grande régularité (au sens de l'autocorrélation) parmi les différentes tables du jeu de tables agrégées intermédiaires. De la sorte, les résultats d'une analyse basée par exemple sur une mise en œuvre d'une transformée de Fourier sont améliorées, les discontinuités de la table analysée étant minimisées. Dans l'exemple ci-dessus, la troisième table agrégée candidate est ainsi la courbe C4 correspondant à *x*=4.

Par ailleurs, lorsque plusieurs tables agrégées intermédiaires ont une valeur moyennée de même valeur maximale parmi l'ensemble des valeurs moyennées, une table agrégée intermédiaire correspondant à la suppression d'un nombre minimal de valeurs successives (lors de la mise en œuvre de la suppression de valeurs dans la troisième table associée au deuxième vissage) est sélectionnée parmi les tables agrégées intermédiaires en question comme étant la troisième table agrégée candidate, ou sélectionnée, selon le critère d'optimisation de périodicité. Ainsi, un nombre maximum de valeurs est obtenu dans la troisième table agrégée candidate de sorte à permettre une meilleure résolution d'analyse de la table en question.

Lors d'une étape 7.2 le nombre total de valeurs de la troisième table agrégée candidate est testé, par exemple par comparaison à un seuil prédéterminé. Par exemple, il est décidé que la troisième table agrégée candidate est la troisième table agrégée lorsque le nombre total de valeurs de la troisième table agrégée candidate est supérieur au seuil prédéterminé. Ainsi, il est considéré que le nombre de valeurs de la troisième table agrégée est suffisant pour pouvoir obtenir une bonne résolution d'analyse des défauts de la visseuse.

Alternativement, lorsque le nombre total de valeurs de la troisième table agrégée candidate est inférieur au seuil prédéterminé, les étapes 4.3 (par exemple après mise en œuvre des étapes 4.1 et 4.2 décrites ci-dessus), 4.4 et 4.5.1 (selon l'une quelconque des mises en œuvre précitées) sont de nouveau mises en œuvre pour un nouveau vissage de vis par la visseuse. Une nouvelle troisième table correspondante est ainsi délivrée. Sur cette base, l'étape 7.1 d'agrégation optimisée (selon l'un quelconque des modes de réalisation précités) est à nouveau appliquée à la troisième table agrégée candidate et la nouvelle troisième table. Une nouvelle troisième table agrégée candidate est ainsi délivrée. Ainsi, lorsque le nombre de valeurs de la troisième table agrégée n'est pas suffisant pour pouvoir effectuer une analyse fine des défauts de la visseuse, une nouvelle agrégation optimisée est mise en œuvre de manière itérative dans le but d'obtenir un nombre de valeurs suffisant pour une analyse fine des résultats.

Dans certains modes de réalisation, la nouvelle troisième table agrégée candidate fait l'objet d'un nouveau test sur le nombre des valeurs qu'elle contient selon une nouvelle mise en œuvre de l'étape 7.2 telle que décrite ci-dessus.

Dans certains modes de réalisation, l'étape 7.2 n'est pas mise en œuvre et l'analyse est effectuée systématiquement sur la troisième table agrégée candidate obtenue à partir de la concaténation optimisée de valeurs mesurées lors d'un nombre prédéterminé de vissages (par exemple deux vissages, trois vissages, etc.). Dans ces modes de réalisation, la troisième table agrégée candidate obtenue après la mise en œuvre de l'étape 7.1 un nombre de fois correspondant au nombre prédéterminé en question est systématiquement la troisième table agrégée.

De retour à la Fig. 7, la troisième table agrégée est analysée de manière à délivrer au moins une information représentative d'une dispersion et/ou d'un écart par rapport à l'objectif de vissage, résultant de perturbations induites par la visseuse. Par exemple, une telle analyse est implémentée selon la technique décrite ci-dessus en relation avec les première (cf. étapes 4.5.2, 4.5.3, 4.5.4, 4.5.5, 4.5.6, 4.6, selon l'une quelconque des mises en œuvre précitées) et deuxième mises en œuvre du procédé du paragraphe 5.3.

### 4.2 Deuxième mode de réalisation de l'invention

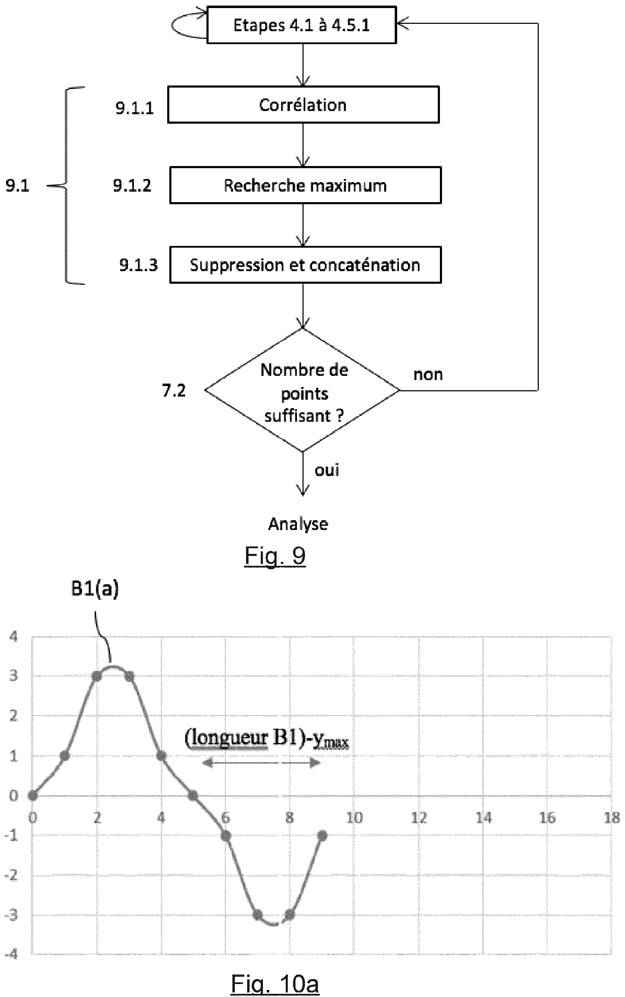

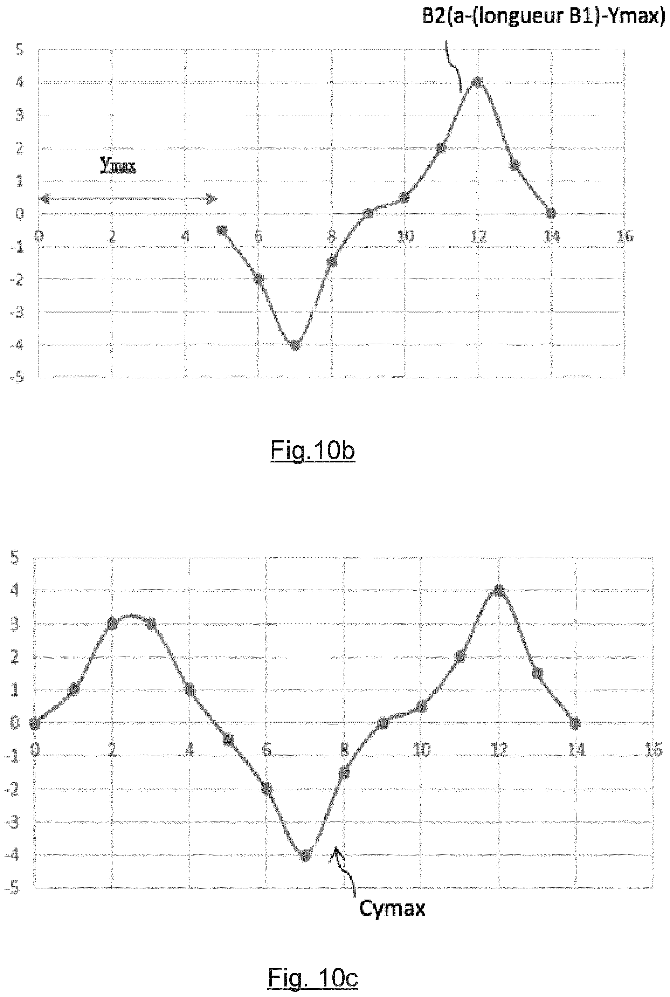

En relation avec la **Fig. 9,** un deuxième mode de réalisation va maintenant être décrit. La **Fig. 9** présente un ordinogramme des principales étapes pour la mise en œuvre d'un procédé de contrôle d'un niveau de qualité de vissage d'une visseuse, par rapport à un objectif de vissage prédéterminé, selon un quatrième exemple de réalisation. Certaines étapes de ce deuxième mode de réalisation sont par ailleurs illustrées plus avant via les courbes représentées sur les **Fig. 10a, Fig. 10b** et **Fig. 10c.**

Le premier mode de réalisation décrit précédemment donne de très bons résultats. Cependant, le calcul de l'autocorrélation est assez couteux en charge de calcul ainsi qu'en mémoire. Le deuxième mode de réalisation permet de limiter la charge de calculs au prix de résultats légèrement moins bons. De tels résultats sont cependant suffisants dans beaucoup de cas pratiques.

Tout comme dans le premier mode de réalisation décrit ci-dessus, selon le deuxième mode de réalisation, les étapes 4.3 (par exemple après mise en œuvre des étapes 4.1 et 4.2), 4.4 et 4.5.1 sont mises en œuvre pour au moins un premier et un deuxième vissage de vis par la visseuse. Ainsi deux premières tables de valeurs associées respectivement au premier et au deuxième vissage, deux deuxièmes tables de valeurs associées au premier et au deuxième vissage et deux troisièmes tables associées au premier et au deuxième vissages sont obtenues.

Afin de pouvoir procéder à une analyse fine des mesures effectuées, par exemple sur la base d'un nombre suffisant de points de mesures, lors d'une étape 9.1, une agrégation optimisée de la troisième table associée au premier vissage et de la troisième table associée au deuxième vissage est mise en œuvre. Une telle agrégation optimisée comprend une suppression, dans la troisième table associée au deuxième vissage, d'un nombre de valeurs déterminé selon un critère d'optimisation de périodicité. Une troisième table agrégée candidate est délivrée à l'issue de la mise en œuvre de l'étape 9.1.

Pour se faire, lors d'une sous-étape 9.1.1, une corrélation est calculée entre, d'une part, la troisième table associée au premier vissage et, d'autre part, la troisième table associée au deuxième vissage. Une fonction de corrélation est ainsi délivrée.

Reconsidérant l'exemple des courbes (et vecteurs de valeurs associées) B1 et B2 de la **Fig. 8b** décrite ci-dessus et représentant les troisièmes tables associées respectivement au premier et au deuxième vissage, la formule suivante est par exemple utilisée pour obtenir la fonction de corrélation en question (y est ici l'argument de la fonction de corrélation) :

$$g(y) = \frac{\sum_{i=0}^{(longueur\ B_1)-y-1} B_1(i+y) \times B_2(i)}{(longueur\ B_1) - y}$$

Selon une telle formule, la longueur de B1 doit être inférieure ou égale à la longueur de B2. En pratique, il est toujours possible d'intervertir le rôle de B1 et de B2 le cas échéant afin de satisfaire une telle condition.

Lors d'une sous-étape 9.1.2, une valeur d'argument ymax (correspondant en pratique à un angle de rotation de la visseuse) maximisant la fonction de corrélation g(y) est déterminée. Le critère d'optimisation de périodicité correspond dans ce cas à la suppression, dans la troisième table associée au premier vissage, d'un nombre de valeurs successives, dit nombre optimisé, fonction de la valeur d'argument maximisant la fonction de corrélation g(y).

Par ailleurs, lorsque plusieurs valeurs d'arguments maximisent la fonction de corrélation g(y), le nombre optimisé est fonction d'une valeur d'argument maximale parmi les valeurs d'arguments maximisant la fonction de corrélation g(y). Ainsi, un nombre maximum de valeurs est obtenu dans la troisième table agrégée de sorte à permettre une meilleure résolution d'analyse de la table en question.

Dans des variantes, la recherche de la ou des valeurs d'arguments maximisant la fonction de corrélation g(y) est limitée à l'intervalle $y \in [\frac{longueur B_1}{2}; longueur B_1[$ de sorte à ne supprimer au maximum que la moitié des valeurs de la troisième table associée au premier vissage.

Lors d'une sous-étape 9.1.3, une version tronquée de la troisième table associée au premier vissage et la troisième table associée au deuxième vissage sont concaténées de sorte à délivrer une troisième table agrégée candidate. La troisième table tronquée résulte d'une suppression, dans la troisième table associée au premier vissage, du nombre optimisé de valeurs successives correspondant à des arguments d'amplitude maximale parmi les valeurs de la troisième table associée au premier vissage. En d'autres termes, ce sont les dernières valeurs de la troisième table associée au premier vissage que l'on supprime ici.

Par exemple, reconsidérant l'exemple des courbes (et vecteurs de valeurs associées) B1 et B2 de la **Fig. 8b,** la troisième table agrégée candidate correspond à la courbe (et au vecteur de valeurs associées) Cymax définie par :

$$C_{y_{max}}(a) = \begin{cases} B_1(a) \ si \ a \leq (longueur \ B_1) - y_{max} \\ B_2(a - (longueur \ B_1) - y_{max}) \ sinon \end{cases}$$

Les différentes courbes correspondantes, i.e. B1(a), B2(a-(longueur B1)-Ymax) et Cymax sont représentées respectivement sur les **Fig. 10a, Fig. 10b** et **Fig. 10c.**

Le présent deuxième mode de réalisation comprend également l'étape 7.2 (selon l'un quelconque des modes de réalisation précités) de test du nombre total de valeurs de la troisième table agrégée candidate et/ou d'analyse (selon l'un quelconque des modes de réalisation précités) telles que décrites ci-dessus en relation avec le premier mode de réalisation du procédé selon l'invention.

Dans certains modes de réalisation, l'étape 7.2 n'est pas mise en œuvre et l'analyse est effectuée systématiquement sur la troisième table agrégée candidate obtenue à partir de la concaténation optimisée de valeurs mesurées lors d'un nombre prédéterminé de vissages (par exemple deux vissages, trois vissages, etc.). Dans ces modes de réalisation, la troisième table agrégée candidate obtenue après la mise en œuvre de l'étape 9.1 un nombre de fois correspondant au nombre prédéterminé en question est systématiquement la troisième table agrégée.

## Revendications

1.  Procédé d'aide à la maintenance d'un outil industriel tel qu'une visseuse ou une perceuse, mettant en œuvre plusieurs composants mobiles en rotation, le procédé comprenant les étapes suivantes :

    - obtention (151) de données de mesure représentatives d'un angle et/ou d'un couple lors d'une utilisation dudit outil ;
    - analyse (152) desdites données de mesure, de façon à déterminer au moins une donnée de qualité représentative de perturbations éventuelles induites pour chacun des composants d'un ensemble de composants contrôlés, délivrant une signature dudit outil comprenant lesdites données de qualité ;
    - stockage (153) de ladite signature dans une mémoire associée audit outil, et lisible sans contact à courte distance ;
    - lecture (154) à distance de ladite signature dans ladite mémoire, à l'aide d'un terminal d'aide à la maintenance ;
    - identification (155) d'un composant nécessitant une intervention, à partir de ladite signature ;

    ledit procédé étant **caractérisé en ce qu'**il comprend les étapes suivantes :

    - obtention par ledit terminal d'informations d'assistance sur ladite intervention à effectuer, comprenant des informations en trois dimensions sur ledit outil ;
    - guidage de l'opérateur, par ledit terminal, pour la réalisation d'une intervention sur un composant défectueux, comprenant :

        - prise de vue d'au moins une image dudit outil, à l'aide d'une caméra montée sur ledit terminal ;
        - affichage (156) d'une représentation en réalité augmentée, à l'aide de la ou desdites images et desdites informations en trois dimensions, identifiant ledit composant défectueux et/ou des opérations de maintenance à effectuer.

2.  Procédé d'aide à la maintenance d'un outil selon la revendication 1, **caractérisé en ce que** ladite étape d'obtention d'informations d'assistance comprend une étape de connexion à un serveur de maintenance distant, contenant un ensemble d'informations relatives audit outil, dit jumeau numérique de l'outil, et comprenant au moins une des informations appartenant au groupe comprenant :

- une représentation en trois dimensions de l'outil,
- un éclaté de l'outil,
- une fiche signalétique de l'outil,
- une nomenclature de l'outil,
- un procès-verbal de calibration de l'outil,
- un historique de maintenance de l'outil,
- une signature théorique de l'outil,
- une signature initiale de l'outil,
- au moins une signature précédente de l'outil.

3. Procédé d'aide à la maintenance d'un outil selon la revendication 1, **caractérisé en ce que** ladite étape d'analyse est mise en œuvre dans un concentrateur connecté audit outil, recevant lesdites données de mesure dudit outil, effectuant ladite analyse.

4. Procédé d'aide à la maintenance d'un outil selon la revendication 1, **caractérisé en ce que** ladite signature comprend une pluralité de raies fréquentielles, et **en ce que** ladite étape d'identification effectue une comparaison de l'amplitude de chaque raie avec une valeur de seuil prédéterminée.

5. Procédé d'aide à la maintenance d'un outil selon la revendication 1, **caractérisé en ce que** ladite signature comprend une pluralité de raies fréquentielles, et **en ce que** ladite étape d'identification met en œuvre une analyse de l'évolution de l'amplitude de chaque raie entre deux signatures.

6. Procédé d'aide à la maintenance d'un outil selon la revendication 1, **caractérisé en ce que** ladite étape d'analyse tient compte d'une agrégation de données de mesures correspondant à au moins deux vissages.

7. Procédé d'aide à la maintenance d'un outil selon la revendication 1, **caractérisé en ce qu'**il comprend une étape de prédiction d'une usure ou d'un défaut d'un composant, par analyse d'une série d'au moins deux signatures dudit outil et/ou d'un lot d'outils similaires et/ou par comparaison à des valeurs de seuil prédéterminées.

8. Système d'aide à la maintenance d'un outil industriel tel qu'une visseuse ou une perceuse, ledit outil mettant en œuvre plusieurs composants mobiles en rotation, le système comprend au moins un serveur de maintenance distant et au moins un terminal de maintenance apte à communiquer avec ledit outil et avec ledit serveur,

ledit outil comprenant une mémoire associée lisible sans contact à courte distance, contenant au moins une signature comprenant des données de qualité représentatives de perturbations éventuelles induites par chacun des composants d'un ensemble de composants contrôlés, déterminés à partir d'une analyse desdites données de mesure représentatives d'un angle et/ou d'un couple lors d'une utilisation dudit outil,
ledit terminal comprenant des moyens de lecture sans contact de ladite signature et des moyens de connexion audit serveur distant, de façon à obtenir des informations d'assistance sur une intervention à effectuer sur un composant défectueux, comprenant des informations en trois dimensions sur ledit outil, en fonction d'une analyse de ladite signature, et des moyens de guidage de l'opérateur, pour la réalisation de ladite intervention sur un composant défectueux, comprenant des moyens de prise de vue d'au moins une image dudit outil, à l'aide d'une caméra montée sur ledit terminal et des moyens d'affichage d'une représentation en réalité augmentée, à l'aide de la ou desdites images et desdites informations en trois dimensions, identifiant ledit composant défectueux et/ou des opérations de maintenance à effectuer.

9. Système selon la revendication 8, **caractérisé en ce que** ledit serveur de maintenance distant, contient un ensemble d'informations relatives audit outil, dit jumeau numérique de l'outil, et comprenant au moins une des informations appartenant au groupe comprenant :

- une représentation en trois dimensions de l'outil,
- un éclaté de l'outil,
- une fiche signalétique de l'outil,
- une nomenclature de l'outil,

- un procès-verbal de calibration de l'outil,
- un historique de maintenance de l'outil,
- une signature théorique de l'outil,
- une signature initiale de l'outil,
- au moins une signature précédente de l'outil.

10. Produit programme d'ordinateur comprenant des instructions de code de programme pour la mise en œuvre des étapes de lecture, d'identification, d'obtention, de guidage du procédé selon l'une quelconque des revendications 1 à 7, lorsque ledit programme est exécuté sur un terminal d'aide à la maintenance comprenant un microprocesseur et/ou sur un ordinateur.


**Patentansprüche**

1. Hilfsverfahren zur Wartung eines Industriewerkzeugs wie eines Schraubers oder einer Bohrmaschine, bei dem mehrere drehbewegliche Komponenten eingesetzt werden, wobei das Verfahren die folgenden Schritte umfasst:

- Erhalten (151) von Messdaten, die einen Winkel und/oder ein Drehmoment während einer Verwendung des Werkzeugs darstellen;
- Analysieren (152) der Messdaten, um mindestens ein Qualitätsdatenelement zu bestimmen, das mögliche Störungen darstellt, die für jede der Komponenten einer Gruppe von kontrollierten Komponenten induziert werden, wodurch eine Signatur des Werkzeugs geliefert wird, die die Qualitätsdaten umfasst;
- Speichern (153) der Signatur in einem Speicher, der mit dem Werkzeug verbunden und aus kurzer Entfernung kontaktlos lesbar ist;
- Fernlesen (154) der Signatur in dem Speicher mithilfe eines Wartungshilfsendgeräts;
- Identifizieren (155) einer Komponente, die einen Eingriff erfordert, anhand der Signatur;

wobei das Verfahren **dadurch gekennzeichnet ist, dass** es die folgenden Schritte umfasst:

- Erhalten von Unterstützungsinformationen über den durchzuführenden Eingriff, einschließlich dreidimensionaler Informationen über das Werkzeug, über das Endgerät;
- Anleiten des Bedieners durch das Endgerät zur Durchführung eines Eingriffs an einer defekten Komponente, umfassend:

- Aufnehmen mindestens eines Bildes des Werkzeugs mithilfe einer an dem Endgerät montierten Kamera;
- Anzeigen (156) einer Darstellung in Augmented Reality mithilfe des oder der Bilder und der dreidimensionalen Informationen, die die defekte Komponente und/oder die durchzuführenden Wartungsarbeiten identifizieren.

2. Hilfsverfahren zur Wartung eines Werkzeugs nach Anspruch 1, **dadurch gekennzeichnet, dass** der Schritt des Erhaltens von Unterstützungsinformationen einen Schritt des Verbindens mit einem Remote-Wartungsserver umfasst, der einen Satz von Informationen über das Werkzeug, den sogenannten digitalen Zwilling des Werkzeugs, enthält und mindestens eine der Informationen umfasst, die zu der Gruppe gehören, die Folgendes umfasst:

- eine dreidimensionale Darstellung des Werkzeugs,
- eine Explosionsdarstellung des Werkzeugs,
- ein Datenblatt zu dem Werkzeug,
- eine Materialliste des Werkzeugs,
- ein Kalibrierprotokoll des Werkzeugs,
- eine Wartungshistorie des Werkzeugs,
- eine theoretische Signatur des Werkzeugs,
- eine anfängliche Signatur des Werkzeugs,
- mindestens eine vorherige Signatur des Werkzeugs.

3. Hilfsverfahren zur Wartung eines Werkzeugs nach Anspruch 1, **dadurch gekennzeichnet, dass** der Analyseschritt in einem mit dem Werkzeug verbundenen Hub durchgeführt wird, der die Messdaten des Werkzeugs empfängt und die Analyse durchführt.

**4.** Hilfsverfahren zur Wartung eines Werkzeugs nach Anspruch 1, **dadurch gekennzeichnet, dass** die Signatur eine Vielzahl von Frequenzlinien umfasst und dass der Identifikationsschritt einen Vergleich der Amplitude jeder Linie mit einem vorbestimmten Schwellenwert durchführt.

**5.** Hilfsverfahren zur Wartung eines Werkzeugs nach Anspruch 1, **dadurch gekennzeichnet, dass** die Signatur eine Vielzahl von Frequenzlinien umfasst und dass der Identifikationsschritt eine Analyse der Amplitudenentwicklung jeder Linie zwischen zwei Signaturen durchführt.

**6.** Hilfsverfahren zur Wartung eines Werkzeugs nach Anspruch 1, **dadurch gekennzeichnet, dass** der Analyseschritt eine Aggregation von Messdaten berücksichtigt, die mindestens zwei Verschraubungen entsprechen.

**7.** Hilfsverfahren zur Wartung eines Werkzeugs nach Anspruch 1, **dadurch gekennzeichnet, dass** es einen Schritt des Vorhersagens eines Verschleißes oder eines Defekts einer Komponente durch Analyse einer Reihe von mindestens zwei Signaturen des Werkzeugs und/oder einer Charge ähnlicher Werkzeuge und/oder durch Vergleich mit vorbestimmten Schwellenwerten umfasst.

**8.** Hilfssystem zur Wartung eines Industriewerkzeugs wie eines Schraubers oder einer Bohrmaschine, wobei das Werkzeug mehrere drehbewegliche Komponenten einsetzt, wobei das System mindestens einen Remote-Wartungsserver und mindestens ein Wartungsendgerät umfasst, das mit dem Werkzeug und mit dem Server kommunizieren kann,

wobei das Werkzeug einen zugehörigen Speicher umfasst, der aus kurzer Entfernung kontaktlos lesbar ist und mindestens eine Signatur enthält, die Qualitätsdaten umfasst, die mögliche Störungen darstellen, die von jeder der Komponenten einer Gruppe von kontrollierten Komponenten induziert werden und die anhand einer Analyse der Messdaten bestimmt werden, die einen Winkel und/oder ein Drehmoment während einer Verwendung des Werkzeugs darstellen,
wobei das Endgerät Mittel zum kontaktlosen Lesen der Signatur und Mittel zum Verbinden mit dem Remote-Server umfasst, um Unterstützungsinformationen über einen Eingriff zu erhalten, der an einer defekten Komponente durchzuführen ist, einschließlich dreidimensionaler Informationen über das Werkzeug, basierend auf einer Analyse der Signatur, und Mittel zum Anleiten des Bedieners, um den Eingriff an einer defekten Komponente durchzuführen, umfassend Mittel zum Aufnehmen mindestens eines Bildes des Werkzeugs mithilfe einer an dem Endgerät montierten Kamera und Mittel zum Anzeigen einer Darstellung in Augmented Reality mithilfe des oder der Bilder und der dreidimensionalen Informationen, die die defekte Komponente und/oder die durchzuführenden Wartungsarbeiten identifizieren.

**9.** System nach Anspruch 8, **dadurch gekennzeichnet, dass** der Remote-Wartungsserver einen Satz von Informationen über das Werkzeug, den sogenannten digitalen Zwilling des Werkzeugs, enthält und mindestens eine der Informationen umfasst, die zu der Gruppe gehören, die Folgendes umfasst:

- eine dreidimensionale Darstellung des Werkzeugs,
- eine Explosionsdarstellung des Werkzeugs,
- ein Datenblatt zu dem Werkzeug,
- eine Materialliste des Werkzeugs,
- ein Kalibrierprotokoll des Werkzeugs,
- eine Wartungshistorie des Werkzeugs,
- eine theoretische Signatur des Werkzeugs,
- eine anfängliche Signatur des Werkzeugs,
- mindestens eine vorherige Signatur des Werkzeugs.

**10.** Computerprogrammprodukt, das Programmcodeanweisungen zur Durchführung der Schritte des Lesens, Identifizierens, Erhaltens und Anleitens des Verfahrens nach einem der Ansprüche 1 bis 7 umfasst, wenn das Programm auf einem Wartungshilfsendgerät, das einen Mikroprozessor umfasst, und/oder auf einem Computer ausgeführt wird.

**Claims**

**1.** A method for assisting in the maintenance of an industrial tool such as a screwdriver or a drill, implementing several rotatably movable components, the method comprising the following steps of:

- obtaining (151) measurement data representative of an angle and/or a torque upon using said tool;
- analysing (152) said measurement data, so as to determine at least one piece of quality data representative of possible disturbances induced for each of the components of a set of controlled components, delivering a signature of said tool comprising said quality data;
- storing (153) said signature in a memory associated with said tool, and contactlessly readable at a short distance;
- remotely reading (154) said signature in said memory, using a maintenance assist terminal;
- identifying (155) a component requiring an intervention, from said signature;

said method being **characterised in that** it comprises the following steps of:

- obtaining, by said terminal, assistance information on said intervention to be performed, comprising three-dimensional information on said tool;
- guiding the operator, by said terminal, for performing an intervention on a defective component, comprising:

- shooting at least one image of said tool, using a camera mounted to said terminal;
- displaying (156) an augmented reality representation, using said image(s) and said three-dimensional information, identifying said defective component and/or maintenance operations to be performed.

2. The method for assisting in the maintenance of a tool according to claim 1, **characterised in that** said step of obtaining assistance information comprises a step of connecting to a remote maintenance server, containing a set of information relating to said tool, referred to as the digital twin of the tool, and comprising at least one of the information belonging to the group comprising:

- a three-dimensional representation of the tool,
- an exploded view of the tool,
- a data sheet of the tool,
- a nomenclature of the tool,
- a calibration report of the tool,
- a maintenance history of the tool,
- a theoretical signature of the tool,
- an initial signature of the tool,
- at least one previous signature of the tool.

3. The method for assisting in the maintenance of a tool according to claim 1, **characterised in that** said analysis step is implemented in a hub connected to said tool, receiving said measurement data from said tool, performing said analysis.

4. The method for assisting in the maintenance of a tool according to claim 1, **characterised in that** said signature comprises a plurality of frequency lines, and **in that** said identification step performs a comparison of the amplitude of each line with a predetermined threshold value.

5. The method for assisting in the maintenance of a tool according to claim 1, **characterised in that** said signature comprises a plurality of frequency lines, and **in that** said identification step implements an analysis of the course of the amplitude of each line between two signatures.

6. The method for assisting in the maintenance of a tool according to claim 1, **characterised in that** said analysis step takes an aggregation of measurement data corresponding to at least two screwing operations into account.

7. The method for assisting in the maintenance of a tool according to claim 1, **characterised in that** it comprises a step of predicting wear or defect of a component, by analysing a series of at least two signatures of said tool and/or a batch of similar tools and/or by comparing with predetermined threshold values.

8. A system for assisting in the maintenance of an industrial tool such as a screwdriver or a drill, said tool implementing several rotatably movable components, the system comprising at least one remote maintenance server and at least one maintenance terminal capable of communicating with said tool and with said server,

said tool comprising an associated memory contactlessly readable at a short distance, containing at least one signature comprising quality data representative of possible disturbances induced by each of the components of a set of controlled components, determined from an analysis of said measurement data representative of an angle and/or a torque upon using said tool,
said terminal comprising contactless means for reading said signature and means for connecting to said remote server, so as to obtain assistance information on an intervention to be performed on a defective component, comprising three-dimensional information on said tool, based on an analysis of said signature, and means for guiding the operator, for performing said intervention on a defective component, comprising means for shooting at least one image of said tool, using a camera mounted to said terminal and means for displaying an augmented reality representation, using said image(s) and said three-dimensional information, identifying said defective component and/or maintenance operations to be performed.

9. The system according to claim 8, **characterised in that** said remote maintenance server contains a set of information relating to said tool, referred to as the digital twin of the tool, and comprising at least one of the information belonging to the group comprising:

   - a three-dimensional representation of the tool,
   - an exploded view of the tool,
   - a data sheet of the tool,
   - a nomenclature of the tool,
   - a calibration report of the tool,
   - a maintenance history of the tool,
   - a theoretical signature of the tool,
   - an initial signature of the tool,
   - at least one previous signature of the tool.

10. A computer program product comprising program code instructions for implementing the reading, identifying, obtaining and guiding steps of the method according to any one of claims 1 to 7, when said program is executed on a maintenance assist terminal comprising a microprocessor and/or on a computer.

Fig. 1

Fig. 2

Fig. 3

| 4.1 | Mise en marche de l'outil |
|---|---|

| 4.2 | Mesures du couple et enregistrement des valeurs |
|---|---|

| 4.3 | Détermination de la première table représentative du couple en fonction de l'angle, pour des valeurs d'angle de pas constant |
|---|---|

| 4.4 | Estimation de la caractéristique théorique du vissage |
|---|---|

**4.5**

| 4.5.1 | Obtention d'informations représentatives des perturbations générées par l'outil |
|---|---|
| 4.5.2 | Transformée de Fourier |
| 4.5.3 | Choix d'une caractéristique linéaire (raideur) et détermination de la courbe de montée en couple associée à la raideur du vissage |
| 4.5.4 | Sommation de la caractéristique linéaire et de la courbe représentant l'amplitude et la fréquence de la perturbation |
| 4.5.5 | Maximisation par suppression des décroissances du couple |
| 4.5.6 | Détermination d'une courbe normalisée par soustraction des valeurs de la caractéristique linéaire |

**4.6**

| 4.6.1 | Calcul de l'écart global par rapport audit objectif de vissage et de l'écart-type induits par chaque signature vibratoire |
|---|---|
| 4.6.2 | Calcul de l'écart global par rapport audit objectif de vissage et de la dispersion globale induits par ledit ensemble des signatures vibratoires sélectionnées |

| 4.7 | Evaluation des résultats, Emission d'un signal d'alerte le cas échéant |
|---|---|

Fig. 4

Fig. 5a

Fig. 5b

Fig. 5c

Fig. 5d

Fig. 6a

Fig. 6b

Fig. 6c

Fig. 6d

Fig. 7

Fig. 8a

Fig. 8b

Fig. 8c

Fig. 9

Fig. 10a

Fig.10b

Fig. 10c

Fig.11

Fig. 12

Fig.13

Fig. 14

A →
C → | MESURES | 151

↓ M

| ANALYSE | 152

↓ S

| STOCKAGE
EN MÉMOIRE | 153

↓

| LECTURE
DE LA MÉMOIRE | 154

↓

JN → | IDENTIFICATION
D'UN DÉFAUT | 155

SERVEUR

157

RA →

| REPRÉSENTATION EN
RÉALITÉ AUGMENTÉE | ← I | CAMÉRA

156

158

Fig. 15

**RÉFÉRENCES CITÉES DANS LA DESCRIPTION**

**Documents brevets cités dans la description**

- FR 2882287

- WO 2018177669 A